# EUROPEAN PATENT SPECIFICATION

(11) **EP 2 982 163 B1**
(45) Date of publication and mention of the grant of the patent: **18.10.2017**
(21) Application number: 14719385.8
(22) Date of filing: 04.04.2014
(51) Int. Cl.: H04W 24/08

(54) **ACCOUNTING FOR AN EFFECT OF AN ENVIRONMENTAL CONDITION ON A MEASUREMENT PERFORMED BY A RADIO NODE**
BERÜCKSICHTIGUNG DER AUSWIRKUNG EINER UMWELTBEDINGUNG AUF EINE VON EINEM FUNKKNOTEN DURCHGEFÜHRTE MESSUNG
PRISE EN COMPTE DU EFFET D'UNE CONDITION D'ENVIRONNEMENT SUR UNE MESURE EFFECTUÉE PAR UN NOEUD RADIO

(30) Priority: 04.04.2013 US 201361808265 P
(43) Date of publication of application: 10.02.2016
(73) Proprietor: Telefonaktiebolaget LM Ericsson (publ), 164 83 Stockholm (SE)
(72) Inventor: SIOMINA, Iana, S-183 30 Täby (SE); KAZMI, Muhammad, S-167 39 Bromma (SE)
(74) Representative: Ericsson
(86) International application number: PCT/SE2014/050417
(87) International publication number: WO 2014/163577

(56) References cited:
- EP-A1- 1 937 010
- WO-A1-2011/123893
- US-A1- 2010 311 415

## Description

### TECHNICAL FIELD

The present application generally relates to a wireless communication network.

### BACKGROUND

It is known that atmospheric conditions may have an influence on the performance of wireless equipment, and the prior art proposes ways of compensating such influence. As one example, WO 2011/123893 A1 discloses a wireless network node that optimizes its mode of communication in response to local conditions that are sensed by the node. Furthermore, US 2010/311415 A1 is related to the selective performance, reporting and usage of radio signal quality measurements based on detected environmental conditions, which indicate whether a terminal is located in an indoor environment or an outdoor environment. Since the environment has an effect on the radio signal quality measurement, the terminal uses different rules for performing and reporting the measurements according to the environment.

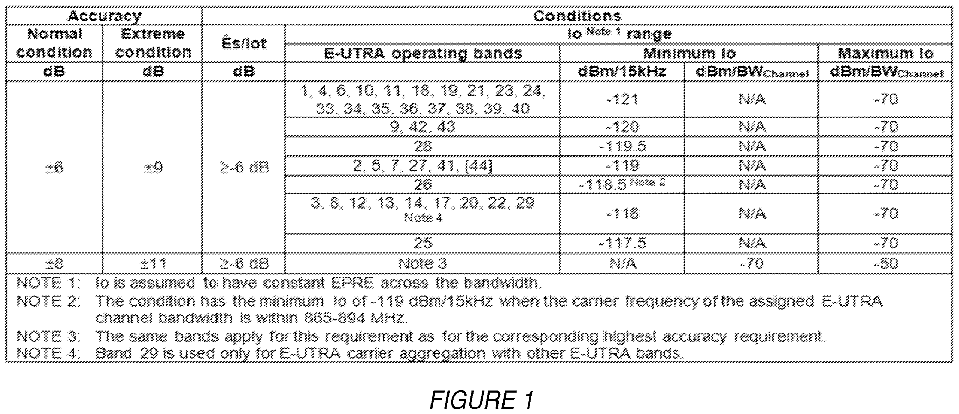

The current Long Term Evolution (LTE) standard specifies that a user equipment (UE) must be able to meet certain requirements over a wide range of conditions under which the UE is tested before deployment, including temperature conditions, power supply voltage conditions, and vibration conditions. As just one example, the LTE standard specifies that, when using certain frequency bands, a UE must be able to measure reference signal received power (RSRP) with an absolute accuracy of ± 6dB under normal test conditions and with an absolute accuracy of ± 9dB under extreme test conditions. See Table 9.1.2.1-1 from 3GPP TS 36.133, reproduced in Figure 1. Similar requirements are specified for the accuracy of other types of measurements, the accuracy with which a signal can be transmitted by a radio transmitter (e.g., UE transmit power), the accuracy with which a signal can be received by a radio receiver (e.g., signal-to-noise ratio, signal strength, etc.), the accuracy of a timer, the accuracy of a timing measurement, etc. The absolute UE transmit power tolerance, for instance, must be ± 9dB under normal test conditions and ± 12dB under extreme test conditions.

The conditions under which the UE is tested in this regard are specified in 3GPP TS 36.101. The test conditions include temperature conditions, power supply voltage conditions, and vibration conditions. With regard to temperature, the UE shall fulfil all the requirements in TS 36.101 in the full temperature range of +15°C to +35°C for normal conditions (with relative humidity of 25 % to 75 %) and -10°C to +55°C for extreme conditions (see IEC publications 68-2-1 and 68-2-2). Outside this temperature range the UE, if powered on, shall not make ineffective use of the radio frequency spectrum. In no case shall the UE exceed the transmitted levels defined for extreme operation.

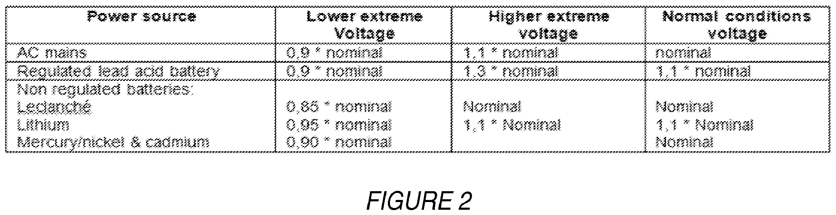

With regard to voltage, the UE shall fulfil all the requirements in TS 36.101 in the full voltage range, i.e. the voltage range between the extreme voltages. The manufacturer shall declare the lower and higher extreme voltages and the approximate shutdown voltage. For the equipment that can be operated from one or more of the power sources listed in Figure 2, the lower extreme voltage shall not be higher, and the higher extreme voltage shall not be lower, than that specified in Figure 2. Outside this voltage range the UE if powered on, shall not make ineffective use of the radio frequency spectrum. In no case shall the UE exceed the transmitted levels defined for extreme operation. In particular, the UE shall inhibit all RF transmissions when the power supply voltage is below the manufacturer declared shutdown voltage.

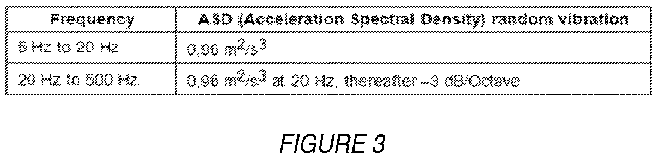

With regard to vibration, the UE shall fulfil all the requirements when vibrated at the frequency/amplitudes shown in Figure 3. Outside the specified frequency range the UE, if powered on, shall not make ineffective use of the radio frequency spectrum. In no case shall the UE exceed the transmitted levels as defined in TS 36.101 for extreme operation.

The LTE standard also specifies base station requirements and testing. The actual requirements are defined in 3GPP TS 36.104 whereas the tests are defined in 3GPP TS 36.141. When in the specified conditions, the tested BS has to meet all relevant pre-defined requirements.

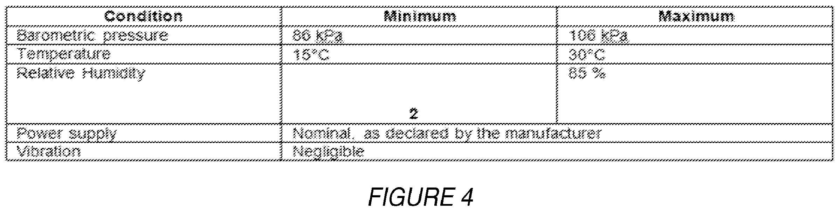

When a normal test environment is specified for a test, the test should be performed within the minimum and maximum limits of the conditions stated in Figure 4. The ranges of barometric pressure, temperature and humidity represent the maximum variation expected in the uncontrolled environment of a test laboratory. If it is not possible to maintain these parameters within the specified limits, the actual values shall be recorded in the test report. The extreme conditions are specified as extreme temperature (maximum and minimum), extreme vibration, and power supply (upper and lower voltage limits).

Accordingly, wireless communication standards merely define measurement and performance-related requirements for different conditions under which a radio node (e.g., a UE or a base station) is tested offline before deployment.

### SUMMARY

Existing wireless standards just define different requirements that a radio node must meet during testing under known temperature, voltage, and vibration conditions. These requirements are statically defined off-line and simply impose certain hardware design constraints on a radio node that remains ignorant of the environmental conditions under which the node actually performs a measurement online. By contrast, one or more embodiments herein advantageously exploit knowledge of these environmental conditions in order to dynamically account for those conditions' effect on the measurement.

The invention is defined by the independent claims. Specifically, one or more embodiments herein include a method implemented by a radio node in a wireless communication network (e.g., a wireless communication device or base station). The method includes determining one or more environmental conditions under which a measurement has been, is being, or will be performed by the radio node. The method further includes performing that measurement. The method also includes accounting for an effect of the one or more environmental conditions on the measurement when at least one of configuring the measurement to be performed and applying different compensation factors or offsets to the result of the measurement.

In some embodiments, such accounting comprises configuring the measurement to be performed differently depending on the one or more environmental conditions. For example, in one or more embodiments, the accounting comprises configuring the measurement to be performed over different bandwidths, over different carrier frequencies, over different periodicities, during different total time intervals, and/or on different cells under different environmental conditions according to a defined mapping of environmental conditions to measurement configurations.

One or more embodiments herein also include a method implemented by a node in the wireless communication network (e.g., a wireless communication device, a radio network node, or a core network node). The method includes determining one or more environmental conditions under which a measurement has been, is being, or will be performed by a radio node in the wireless communication network. The method also includes accounting for an effect of the one or more environmental conditions on the measurement when selectively using a result of the measurement to perform a radio operational task.

For both of the methods above (i.e., for both the method implemented by the radio node and the method implemented by the node), the described accounting in some embodiments comprises associating the result of the measurement with the one or more environmental conditions. Alternatively or additionally, such accounting comprises linking the result of the measurement with information describing the one or more environmental conditions and reporting or logging the result as linked to that information.

The described accounting additionally or alternatively comprises in some embodiments time stamping the result of the measurement in accordance with different time stamp accuracy requirements under different environmental conditions.

Additionally or alternatively, the accounting comprises determining a position of the radio node or another radio node using the result of the measurement, by comparing the result of the measurement to different sets of positioning reference measurements under different environmental conditions.

Additionally or alternatively, the accounting comprises selecting whether to use the result of the measurement to perform the radio operational task depending on the one or more environmental conditions.

Additionally or alternatively, the accounting comprises applying different compensation factors or offsets to the result of the measurement, or to a reference measurement to which the result is compared, under different environmental conditions in order to compensate for those environmental conditions.

Additionally or alternatively, the radio node or node may signal to another node information indicating the radio node's capability to account for the effect of one or more environmental conditions on the measurement.

Embodiments herein further include a method implemented by a network node for configuring a radio node in a wireless communication network. The method includes accounting for an effect of one or more environmental conditions on a measurement that is performed by the radio node when at least one of configuring the radio node to perform the measurement and configuring the radio node to use a result of the measurement to perform a radio operational task.

Accounting by the network node in some embodiments simply comprises sending an indicator to the radio node indicating that the radio node is to determine the one or more environmental conditions under which the measurement is performed and link the result of the measurement with information describing the one or more environmental conditions.

The method implemented by the network node may further include determining, predicting, or assuming the one or more environmental conditions under which the measurement will be performed by the radio node. In this case, accounting in some embodiments may comprise configuring the radio node to perform the measurement differently depending on the one or more environmental conditions. For example, accounting in one or more embodiments may comprise configuring the radio node to perform the measurement over different bandwidths, over different carrier frequencies, over different periodicities, during different total time intervals, and/or on different cells under different environmental conditions according to a defined mapping of environmental conditions to measurement configurations.

The method implemented by the network node may also include receiving from the radio node information indicating the radio node's capability to account for the effect of one or more environmental conditions on the measurement.

In any of the above described embodiments, determining the one or more environmental conditions in some embodiments comprises determining the one or more environmental conditions from explicit measurement of the one or more environmental conditions by a device or sensor.

Also in any of the above described embodiments, the one or more environmental conditions may include at least one of one or more weather or climatic conditions, one or more conditions related to electricity, one or more conditions related to vibration of the radio node, and one or more conditions related to an earthquake.

Embodiments herein further include a radio node, a node, and a network node in a wireless communication network that are configured to perform the respective processing described above, including any variations or modifications thereof.

Finally, embodiments herein include a computer program comprising instructions which, when executed on at least one processor, cause the at least one processor to carry out any of the methods above. A carrier containing such a computer program in some embodiments may be one of an electronic signal, optical signal, radio signal, or computer readable storage medium.

### BRIEF DESCRIPTION OF THE DRAWINGS

Figure 1 is a table showing RSRP accuracy requirements under different test conditions according to existing LTE standards.
Figure 2 is a table showing voltage conditions under which a UE is tested for various possible power sources according to existing LTE standards.
Figure 3 is a table showing vibration conditions under which a UE is tested according to existing LTE standards.
Figure 4 is a table showing a conditions in a normal environment under which a UE is tested according to existing LTE standards.
Figure 5 is a block diagram of a wireless communication network according to one or more embodiments.
Figure 6 is a logic flow diagram of a method implemented by a radio node in a wireless communication network according to one or more embodiments.
Figure 7 is a logic flow diagram of a method implemented by a node in a wireless communication network according to one or more embodiments.
Figure 8 is a logic flow diagram of a method implemented by a network node in a wireless communication network according to one or more embodiments.
Figure 9 is a block diagram of a node in a wireless communication network according to one or more embodiments.
Figure 10 is a block diagram of the functional units of a radio node according to one or more embodiments.
Figure 11 is a block diagram of the functional units of a node according to one or more embodiments.
Figure 12 is a block diagram of the functional units of a network node according to one or more embodiments.
Figure 13 is a block diagram of the code modules in the memory of a radio node according to one or more embodiments.
Figure 14 is a block diagram of the code modules in the memory of a node according to one or more embodiments.
Figure 15 is a block diagram of the code modules in the memory of a network node according to one or more embodiments.

### DETAILED DESCRIPTION

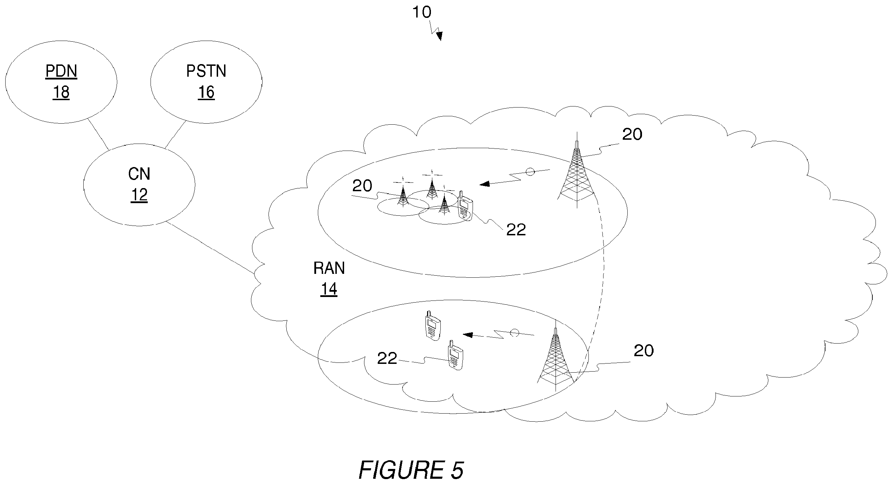

Figure 5 illustrates a wireless communication network 10 according to one or more embodiments. As shown, the network 10 includes a core network (CN) 12 and a radio access network (RAN) 14. The CN 12 connects wireless communication devices to one or more external networks via the RAN 14. The one or more external networks are shown as a public switched telephone network (PSTN) 16 and a packet data network (PDN) 18 such as the Internet.

The RAN 14 includes a plurality of radio access nodes 20, two of which are shown. Each radio access node 20 terminates one or more cells on which transmission are performed for communicating with wireless communication devices 22. A cell in this regard refers to a defined set of radio resources, such as a carrier frequency, for wirelessly communicating over a defined geographic region. For example, in embodiments where the wireless communication network 10 conforms to Long Term Evolution (LTE) Release 11 specifications, the radio access nodes 20 comprise enhanced Node B's (eNodeB's) that each terminates one or more cells (also referred to as component carriers). Regardless, the RAN 14 may further include one or more repeaters, or one or more low-power radio access nodes 20.

As shown, the network 10 includes radio nodes such as the wireless communication devices 22 and the radio access nodes 20. A radio node is characterized by its ability to transmit and/or receive radio signals. A radio node therefore comprises at least a transmitting or receiving antenna.

Embodiments herein concern the environmental conditions under which a radio node in the network 10 operates. An environmental condition as used herein refers to the state of the environment (e.g., the biophysical environment) and therefore describes one or more environmental characteristics or parameters. In one example, an environmental condition refers to the state of any one or more objects or materials (e.g., air, water, body, stone, etc.) with which a radio node interacts through physical and/or chemical processes. In at least some embodiments, an environmental condition includes weather or climatic condition (e.g., temperature), a condition related to electricity (e.g., power supply voltage), a condition related to vibration of the radio node, or a condition related to an earthquake.

Although an environmental condition under which a radio node operates depends on the radio node's position, the condition does not itself encompass that position. An environmental condition therefore does *not* refer to the radio node's deployment status (e.g., as being located at a particular place, as being indoors or outdoors, etc.).

An environmental condition also differs from a radio condition, propagation condition, channel condition, etc, such as additive white Gaussian noise (AWGN), fading type (e.g., frequency selective, frequency non-selective). Although an environmental condition may affect the radio conditions under which a radio node operates, the two categories of conditions are distinguished herein.

With this understanding, examples of the environment herein include water or atmosphere. The atmosphere is a well-known phenomenon and comprises a layer of gases surrounding a body of mass. The body of mass herein encompass any type of physical body which can be a living or non-living object. Earth atmosphere is the layer of gases surrounding the earth. The term environmental condition in this context therefore includes an atmospheric condition, weather condition, climatic condition, meteorological condition, ecological condition etc. The constant interaction between the gases and the body mass (e.g. earth) causes variation in the atmospheric or environmental conditions. For example, the heating up of the earth surface causes change in air pressure, wind speed, wind direction etc.

When referring to the biophysical environment, the environment encompasses all living and non-living things occurring naturally on earth, as potentially affected by human activity. For instance, such encompasses vegetation, soil, rocks, atmosphere, and natural phenomenon, as well as air, water, climate, energy, radiation, electric charge, magnetism, etc. Some of these (e.g., air, climate) may be affected by human activity.

An environmental condition is determined or depicted by one or more attributes. Some non-limiting examples of such attributes are temperature, humidity which can be absolute or relative, specific gravity, wind, mist, haze, fog, pressure, air pollution, concentration level of particles in air (e.g., of gas, chemicals or toxics), air or atmospheric pollution, density, movement related attributes (e.g. vibration, earthquake), electricity related attributes (e.g. static electricity or charged particles, thunderstorm, current, voltage etc).

Each environmental condition or attribute is expressed using one or more metrics or measures. An environmental condition therefore may be described by one or more values or a range, one or more pre-defined levels, an absolute value, a descriptive index or name (e.g. 'normal', 'extreme', etc.), a relative value with respect to a reference, a statistical value (e.g., average over a time interval) or a distribution, an indication of whether the condition is or is not at a pre-defined level, etc. For example, temperature is expressed in Celsius, Kelvin, and Fahrenheit etc. Similarly wind can be expressed in terms of speed, direction, etc. The absolute humidity is expressed as grams per cubic meter whereas relative humidity is expressed in percentage.

Some of these environmental conditions affect the characteristics of the radio signals in the network 10. More specifically, some of the environmental conditions affect the radio communications and in turn affect the performance of radio measurements, signal reception, signal transmission, etc. Certain environmental conditions partly or fully impair the ability of the radio nodes to process, receive and/or transmit radio signals due to increase in thermal noise, e.g. temperature. On the other hand, certain environmental conditions primarily attenuate the radio signals transmitted over the wireless communication link e.g. rain, humidity etc.

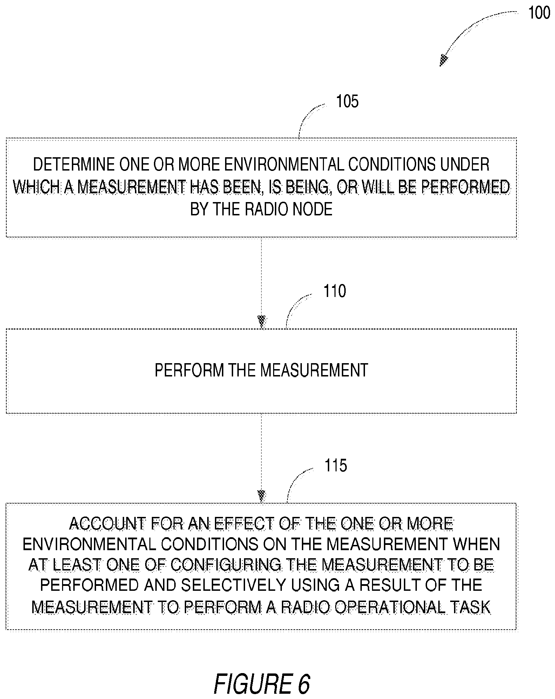

One or more embodiments herein advantageously exploit knowledge of the environmental conditions under which a radio node actually performs a measurement online in order to dynamically account for those conditions' effect on the measurement. One or more embodiments herein for example include a method implemented by a radio node in the wireless communication network 10 (e.g., by a wireless communication device 22 or a radio access node 20). As shown in Figure 6, the method 100 includes determining one or more environmental conditions under which a measurement has been, is being, or will be performed by the radio node (Block 105). The method further includes performing that measurement (Block 110). The method also includes accounting for an effect of the one or more environmental conditions on the measurement when at least one of configuring the measurement to be performed and selectively using a result of the measurement to perform a radio operational task (Block 115). In at least some embodiments, for example, this effectively tailors the measurement configuration and/or the radio operational task "on the fly" for the particular environmental conditions affecting that configuration and/or task.

In some embodiments, the one or more environmental conditions are determined in Block 105 by the node explicitly (e.g., by using one or more sensors to explicitly measure the condition(s)). In other embodiments, the one or more environmental conditions are determined in Block 105 by the radio node implicitly. For example, the radio node may implicitly determine the one or more environmental conditions under which a measurement is performed by receiving time stamped measurement information, receiving time stamped environmental condition information, and comparing the time stamps of the measurement information to the time stamps of the environmental condition information. Regardless, this determination 105 may be performed with at least some degree of inaccuracy or uncertainty, such that the determination more specifically amounts to an estimate or assumption of the one or more environmental conditions.

In some embodiments, the measurement comprises a radio measurement, such as a measurement of reference signal received power (RSRP) or reference signal received quality (RSRQ). In other embodiments, the measurement comprises determining and logging an event or a failure, e.g., as for minimization of drive testing (MDT).

Regardless, in some embodiments, accounting for the one or more environmental conditions when configuring the measurement to be performed (Block 115) involves configuring the measurement to be performed differently depending on the one or more environmental conditions. For example, the radio node may configure the measurement to be performed over different bandwidths, over different carrier frequencies, over different periodicities, during different total time intervals, and/or on different cells under different environmental conditions. For instance, the radio node may configure the measurement to be performed over a lower frequency under certain environmental conditions (e.g., more extreme conditions), and over a higher frequency under other environmental conditions (e.g., normal conditions). Regardless, in at least some embodiments this entails the radio node dynamically selecting from amongst different possible measurement configurations that are mapped to different determined environmental conditions. The radio node may for instance receive this mapping of measurement configurations to environmental conditions from another node.

In some embodiments, the radio nodes' accounting (Block 115) involves associating the result of the measurement with the one or more environmental conditions under which that measurement was performed. Such may entail "tagging" the result of the measurement with those conditions. Tagging the result in this regard means linking the result with information associated with or describing those one or more environmental conditions.

In some embodiments, performing a radio operational task using the measurement's result entails reporting a direct or indirect result of the measurement to another node in the wireless communication network 10. In one or more embodiments, for example, accounting for the one or more environmental conditions when reporting the result of the measurement (Block 115) involves simply reporting the measurement as having been performed under the one or more environmental conditions. This may entail reporting a direct or indirect result of the measurement as well as one or more environmental conditions associated with that result. In some embodiments, for example, the radio node associates the measurement result with one or more environmental conditions by "tagging" the result with those conditions, and then reports the tagged result to the other node.

In other embodiments, performing a radio operational task using the measurement's result entails logging a direct or indirect result of the measurement at the radio node. Such logging may be performed for instance in preparation for the above discussed reporting. Especially in this case, logging proceeds analogously to the reporting just described, but involves recording rather than actually transmitting any report.

In yet other embodiments, performing a radio operational task using the measurement's result involves time stamping a direct or indirect result of the measurement at the node, e.g., as part of logging and/or reporting the measurement. In some embodiments, for example, accounting for the one or more environmental conditions when time stamping the measurement result (Block 115) means time stamping the result in accordance with time stamp accuracy requirements that depend upon or are a function of those one or more environmental conditions. That is, such entails time stamping the result of the measurement in accordance with different time stamp accuracy requirements under different environmental conditions.

In still other embodiments, performing a radio operational task using the measurement's result entails determining a position of the radio node or of another node using a direct or indirect result of the measurement. In some embodiments, for example, accounting for the one or more environmental conditions when determining such position using the measurement result (Block 115) means comparing the result of the measurement to different sets of positioning reference measurements (e.g., reference fingerprint measurements) under different environmental conditions. For example, the radio node may select different tables of positioning reference measurements under different environmental conditions.

In one or more embodiments, accounting for the one or more environmental conditions when selectively using the result of the measurement to perform a radio operational task (Block 115) simply entails selecting whether to use the result of the measurement to perform the task depending on the one or more environmental conditions. For example, under certain environmental conditions (e.g., extreme conditions), the radio node may dynamically select not to use the result of the measurement to perform the task.

In some embodiments, performing a radio operational task using the result of the measurement entails using the result of the measurement to perform mobility-related tasks (e.g., cell selection, cell reselection, or handover), MDT tasks, SON tasks, radio resource management tasks, signal processing tasks (e.g., signal weight computation or combining method selection for combining multiple signal samples or multiple measurements), or the like.

Regardless of the particular radio operational task, whether reporting, logging, time stamping, positioning, etc., accounting for the one or more environmental conditions when performing that task additionally or alternatively involves in at least some embodiments compensating the result of the measurement and/or the result of a reference measurement to which the measurement is compared, in order to account for those conditions. That is, the node performs such compensation before or as part of performing the task. This way, the task is performed based on the compensated measurement and/or reference measurement which accounts for the one or more environmental conditions. Compensation in this regard involves in some embodiments applying different compensation factors or offsets to the result of the measurement or reference measurement under different environmental conditions. A compensation factor or offset may be pre-defined for particular environmental conditions, such as 3dB for extreme environmental conditions. In any event, applying the compensation factor in at least some embodiments reduces or minimizes any error in the measurement result due to the environmental conditions.

For example, where the task involves reporting the result of the measurement, the node compensates the result of the measurement to account for the one or more environmental conditions under which it was performed, and then reports that compensated measurement result. In at least some embodiments, the node additionally reports the measurement as having been performed under those one or more environmental conditions, as described above (e.g., by tagging the compensated measurement result with those conditions). Similar examples extend analogously to logging, time stamping, positioning, etc., whereby the node compensates the measurement result and then performs logging, time stamping, positioning, etc. using the compensated measurement result.

The application of a compensation factor to a measurement result may be used to obtain a more accurate measurement result. The compensation factor or correction factor is applied in some embodiments using an expression or a function and/or a pre-defined lookup table. The expression, function, and/or lookup table establish a relation between at least one environmental condition and the amount of signal loss or the amount of the compensation required to compensate the loss of signal in that at least one condition. The expression or lookup table may also be specific to a measurement or measurement type or may be common for a group of measurements, e.g., the same for all timing measurements, the same for all signal strength measurements, etc. The lookup table may be created in the background by collecting experimental data or radio measurement statistics e.g. by collecting radio measurements under different environmental conditions. Such an experiment can be performed in a field or in a laboratory under a controlled environment to obtain desired radio measurements. For example, assume the radio node reports a radio measurement result (e.g. RSRP of -90 dBm) tagged with extreme temperature. The pre-defined lookup table depicts that at extreme temperature the signal strength is deteriorated by 2 dB. The radio node will therefore translate the reported RSRP measurement of -90 dBm to -88 dBm. In this way, the more accurate radio measurement result may be obtained by the radio node.

Irrespective of the particular approach to accounting, the radio node in at least some embodiments signals to another node information indicating the radio node's capability to account for the effect of one or more environmental conditions on the measurement.

Note that the accounting described above differs from just defining different requirements that a radio node's measurement must meet under different environmental conditions. Indeed, traditionally, those requirements have been statically defined off-line and simply impose certain hardware design constraints on a node that remains ignorant of the environmental conditions under which a measurement is actually performed online. By contrast, the radio node herein actually has knowledge of these environmental conditions, and exploits that knowledge in order to dynamically account for those conditions' effect on the result of the measurement.

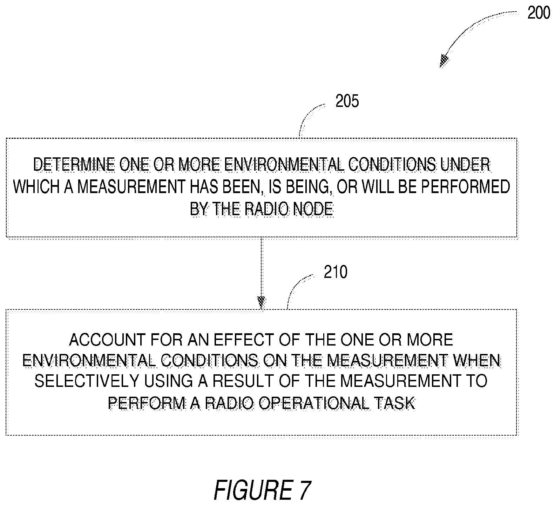

Although the above has been described from the perspective of a radio node, at least some of the above embodiments may additionally or alternatively be implemented by any node in the network (e.g., a radio node or a network node). Indeed, as shown in Figure 7, one or more embodiments herein include a method 200 implemented by a node in the network 10. The method 200 includes determining one or more environmental conditions under which a measurement has been, is being, or will be performed by a radio node in the wireless communication network 10 (Block 205). The method further includes accounting for an effect of the one or more environmental conditions on the measurement when selectively using a result of the measurement to perform a radio operational task (Block 210).

Accounting for the effect of the one or more conditions on the measurement when selectively using the result in this regard may proceed analogously to that described above with respect to the radio node. That is, such accounting may entail associating the result of the measurement with the one or more environmental conditions under which that measurement was performed. Additionally or alternatively, accounting may entail reporting to another node or logging a direct or indirect result of the measurement as associated with the one or more environmental conditions. Additionally or alternatively, accounting may entail time stamping the result in accordance with time stamp accuracy requirements that depend upon or are a function of those one or more environmental conditions. Additionally or alternatively, accounting may entail comparing the result of the measurement to different sets of positioning reference measurements (e.g., reference fingerprint measurements) under different environmental conditions. Finally, accounting may entail compensating the result of the measurement and/or the result of a reference measurement to which the measurement is compared, in order to account for those conditions.

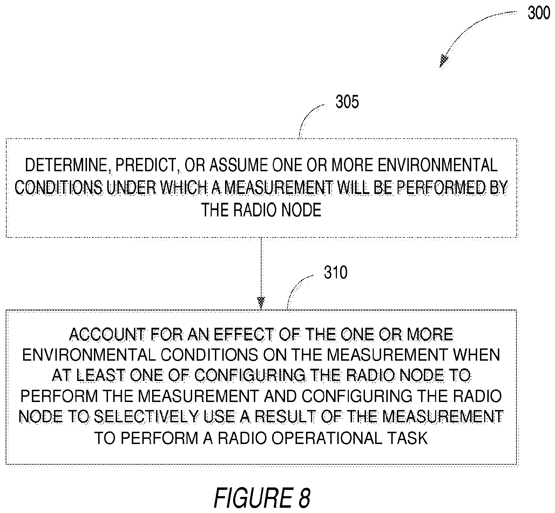

Other embodiments herein involve a network node for configuring the radio node. The network node may be a radio access node, a positioning node, a minimization of drive tests (MDT) or trace collection entity (TCE) node, a coordinating node, etc. Regardless, as shown in Figure 8, a method 300 performed by the network node includes accounting for an effect of one or more environmental conditions on a measurement that is performed by the radio node when at least one of configuring the radio node to perform the measurement and configuring the radio node to use a result of the measurement to perform a radio operational task (Block 310).

In some embodiments, such accounting simply entails sending an indicator to the radio node indicating that the radio node is to determine the one or more environmental conditions under which the measurement is performed and associate (e.g., link) the result of the measurement with information describing the one or more environmental conditions. Specific environmental conditions of interest may also be indicated by or associated with the indicator. Note that the indicator may also indicate that the radio node is to do so upon one or more triggers being met (e.g., upon signal strength or quality falling below a threshold, upon a timer expiring, etc.).

Alternatively or additionally, such accounting involves configuring the radio node with at least one parameter related to one or more environmental conditions to be associated with the result of a measurement. The at least one parameter may comprise for instance one or more metrics or measures (e.g., Celsius for temperature, values for discrete levels, etc.) to use for describing an environmental condition.

In still other embodiments, the method 300 actually involves determining, predicting, or assuming the one or more environmental conditions under which the measurement will be performed by the radio node (Block 305). The network node in some embodiments then configures the radio node to perform the measurement differently depending on the one or more environmental conditions. For instance, the network node configures the radio node to perform the measurement over different bandwidths, over different carrier frequencies, over different periodicities, during different total time intervals, and/or on different cells under different environmental conditions according to a defined mapping of environmental conditions to measurement configurations

For example, the network node may receive a report from another node regarding such condition(s) and configure the radio node according to those reported conditions. In another embodiment, the network node assumes that the radio node's measurement will be performed in one of two or more alternative environmental conditions and then provides alternative configurations to the radio node. The radio node then selects the most suitable alternative configuration accounting for the actual conditions. In still another embodiment, the network node assumes that the measurement will be performed in the most common or most probably environmental conditions and configures the radio node accordingly.

The measurement performed by the radio node as described above may be performed at a particular layer. For example, the measurement may be a physical layer or Layer 1 (L1) measurement, such as a radio measurement. See, e.g., 3GPP TS 36.214. The measurement may alternatively be a higher-layer measurement such as a Layer 2 measurement. See, e.g., TS 36.314.

The measurement performed by the radio node may be further differentiated by one or more of the performing node (e.g., UE measurements, BS measurements, LMU measurements, etc.), direction (e.g., downlink measurements, uplink measurements, device-to-device measurements, etc.), and measurement type (e.g., power-based measurements such as received signal strength or quality measurements; angle measurements such as AOA; timing measurements such as RxTx, RSTD, TOA, TDOA, timing advance; transmit power measurements; number of active UEs; throughput measurements; failure event log or an error measurement; etc.).

A measurement herein may be absolute, relative to a common reference or to another measurement, and/or composite (US 61/678462 filed on 2012-08-01 and incorporated by reference herein in its entirety), etc. A measurement may be on one link or more than one links (e.g., RSTD, timing advance, RTT, relative RSRP; measurements over multifarious links described in PCT/SE2012/050644 filed on 2012-06-13 and incorporated by reference herein in its entirety, etc.).

A measurement may also be differentiated by purpose and may be performed for one or more purposes. For example, the measurement may be performed for one or more of RRM (e.g. as in 3GPP 36.133), MDT (e.g. as in 3GPP TS 37.320), SON (e.g. as in 36.133), Positioning (e.g. as in 3GPP 36.305), Timing control, timing advance, and Synchronization. Embodiments herein may apply to any measurement described generally above and in more detail below.

### RRM functions

The purpose of radio resource management (RRM) is to ensure the efficient use of the available radio resources and to provide mechanisms that enable E-UTRAN to meet radio resource related targets or requirements. In particular, RRM in E-UTRAN provides means to manage (e.g. assign, re-assign and release) radio resources taking into account single and multi-cell aspects. Some examples of RRM functions are: Radio bearer control, Radio admission control, Mobility control, Dynamic resource allocation and packet scheduling, Inter-cell interference coordination, Load balancing, and/or Inter-RAT resource management. Typically an RRM function is based on some measurements and system feedback collection as well as often also targets to achieve some measurement quality or performance characteristic level.

### Minimization of drive tests (MDT)

With regard to minimization of drive tests (MDT), MDT is used as a means to compensate or partially replace the costly drive tests an operator will otherwise have to perform by configuring a selection of UEs in active or idle mode to do certain types of measurements [3GPP TR 36.805, 37.320]. The selection can be made based on International Mobile Subscriber Identity (IMSI), International Mobile Equipment Identity (IMEI), area, device capabilities and any combinations thereof. The following use cases for MDT have been so far identified: Coverage optimization, Mobility optimization, Capacity optimization, Parameterization for common channels, and Quality of Service (QoS) verification.

Two modes of MDT exist, immediate MDT and logged MDT. Immediate MDT is the MDT functionality involving measurement performance by UE in the high RRC activity states (e.g. RRC CONNECTED state in LTE, CELL_DCH state in UTRA FDD and UTRA TDD etc) and reporting of the measurements to a network node (e.g. eNodeB, RNC, Node B, BSC, BS Relay etc) available at the time of reporting condition. Logged MDT by contrast is the MDT functionality involving measurement performance by UE when operating in a low RRC activity state (e.g. RRC_IDLE in LTE and idle mode, CELL_PCH, URA_PCH or CELL_FACH states in UTRA FDD or UTRA TDD etc). The logging in a low activity state is carried out by the UE at points when configured conditions are satisfied, its storage in measurement log for reporting to a network node (e.g. eNodeB, RNC Node B, BSC, BS, Relay etc) at a later point in time.

One of the requirements [3GPP TR 36.805] for MDT is that the measurements in measurement logs and the reported measurements for immediate MDT shall be linked to *available* location information and/or other information or measurements that can be used to derive location information (only RSRP measurements have been decided for this purpose so far, [3GPP TR 36.805]). The measurements in the measurement logs shall also be linked to a time stamp that is available in the UE. The time stamp can be expressed in absolute or relative values. The relative time stamp is defined as the time elapsed from a reference time to the moment the measurement is logged by a radio node. The reference time is configured by network or is the time when certain event occurs e.g. call dropping, call blocking, serving cell failure, RRC connection establishment or re-establishment failure etc. The relative accuracy of the time stamping (aka relative time stamp accuracy) is the drift of the time stamping e.g. ±1 second. It may also be expressed in terms of parts per million (ppm) or parts per billion (ppb) over certain time duration e.g. ±200 ppb over I hour. This in turn corresponds to ± 0.72 second of drift in time stamp over a period of 1 hour.

The following measurements logs have been considered so far [3GPP TR 36.805]: Periodical downlink pilot measurements, Serving cell becomes worse than threshold, Transmit power headroom becomes less than threshold, Random access failure, Paging channel failure, Broadcast channel failure, Radio link failure report, and RRC connection establishment failure.

In addition to the information which may be specific for the type of the log, all the listed above measurement logs include at least the following: Location info when available (location at which the concerned trigger and/or measurement took place), Time info (e.g., time at which the concerned trigger and/or measurement took place), Cell identification (at least the serving cell is always included), Radio environment measurement (cell measurements that are available at the trigger and/or average cell measurements during a certain period before/after the trigger, where the cell measurements include RSRP and RSRQ measurements).

The currently standardized logs and reports for MDT do not allow to also log/report conditions in which a measurement has been taken.

### Self-Organizing Networks (SON)

The self-organizing network (SON) function in E-UTRAN allows the operators to automatically plan and tune the network parameters and network nodes. The conventional method is based on manual tuning, which consumes enormous amount of time, resources and requires considerable involvement of work force.

SON solutions can be divided into three categories: Self-Configuration, Self-Optimization and Self-Healing. The SON architecture can be a centralized, distributed or a hybrid solution. The use cases and the concepts for SON are described in more detail in 3GPP TS 32.500.

SON benefits greatly from a smart use of collected measurements.

### Positioning

Different positioning methods exist in several wireless communication systems, including GSM, HSPA and LTE. Examples of some well-known positioning methods are E-CID, AECID, OTDOA, UTDOA, GNSS, RF fingerprinting, pattern matching (or RFPM), hybrid positioning, etc., in which radio measurements are used, based on different approaches, to determine a UE location (see e.g., 3GPP 36.305). Some of the approaches, e.g., E-CID, AECID, RFPM, RF fingerprinting, make use of collected radio measurements which are associated with certain reference locations. The accuracy of the collected radio measurements and used for such positioning determines positioning accuracy. Knowing the conditions in which the measurement has been performed would therefore be of a great importance, particularly when different conditions may occur in the same location, e.g., with time, season, height, etc.

In LTE, the positioning node (e.g., E-SMLC, SLP or more generally, location server) configures the target device (e.g. UE), eNode B or a radio node dedicated for positioning measurements (e.g. LMU) to perform one or more positioning measurements depending upon the positioning method. The positioning measurements are used by the target device or by a measuring node or by the positioning node to determine the location of the target device. In LTE the positioning node communicates with UE using LTE positioning protocol (LPP or LPP/LPPe) and with eNode B using LTE positioning protocol annex (LPPa).

### Description of Additional Embodiments

One or more embodiments herein advantageously recognize at least the following problems with the prior art solutions. As a first problem, measurement and performance-related requirements are often defined for different sets of conditions, but the conditions are only used for testing in the known conditions. In practice, the measurements may be used by the network for different purposes. However the network is unaware of the environmental conditions under which the measurements received from a radio node have been performed by the radio node. Under certain conditions (e.g. very low or very high temperature) the measurements performed by a radio node is generally very inaccurate. The environmentally induced measurement error in turn adversely affects radio procedures using this measurement. For example, operations such as mobility, positioning, power control, etc. are degraded due to additional uncertainly caused by the environmental factors. Furthermore if the environmental conditions change before using the measurements for certain radio operation then this may introduce even higher uncertainty in the outcome of the operation.

As a second problem, the currently standardized logs and reports (e.g., for MDT, SON, positioning, or general RRM) do not allow to also log/report environmental conditions in which a measurement has been taken.

As a third problem, there are no means in the network for collecting measurements with associated environmental conditions and also using this information jointly.

One or more embodiments herein therefore generally recognize that environmental conditions (e.g. temperature, pressure, vibration etc) introduce uncertainty in measurements performed by a radio node (e.g. UE, radio network node, etc.). For example, under extreme environmental conditions (e.g. temperature below -10 C or above +55 C) the radio measurement (e.g. RSRP, path loss, RSRQ, etc) is typically 3 dB worse than under normal environmental conditions (e.g. temperature between +15 to +35 C). Several important radio procedures use radio measurements performed by the UE and/or radio network node. Examples of such procedures are power control, UE positioning, UE mobility procedures, RRM, etc. The existing solutions don't take into account the environmental conditions under which the measurements are performed when using the radio measurements for the radio procedures. The node using the measurement is oblivious of the link between the performed measurement and the environmental conditions under which it is performed. Embodiments herein correspondingly include methods to enhance performance of radio procedures using radio measurements regardless of the environmental conditions under which they are performed.

Broadly, embodiments below include: (1) Methods in a network node of configuring a radio node of performing and using measurements accounting for environmental conditions; (2) Methods in a radio node of performing and using measurements accounting for environmental conditions; (3) Methods in a network node of using obtained measurements accounting for environmental conditions for radio operational tasks; and (4) Methods in a node (e.g. network node or a radio node) of signaling its capability of obtaining and/or using measurements accounting for environmental conditions. In some examples, the obtaining may further comprise performing said measurement accounting for the environmental conditions.

Some example embodiments are as follows (the steps described in the embodiments may be performed also in a different order). One example embodiment includes a method in a radio node. The method comprises performing a measurement. The method further comprises determining at least one environmental condition under which the measurement is performed. Finally, the method comprises performing at least one radio operational task by using the performed measurement while accounting for the determined environmental condition. This task comprises (A) reporting the measurement by associating it with the determined environmental condition to another node (radio node and/or network node) and/or (B) logging the measurement by associating it with the determined environmental condition and/or (C) applying a compensation factor to the measurement to mitigate the error or a gain over a reference measurement due to environmental condition and/or (D) using the compensated measurement or the measurement together with the environmental condition information for one or more RRM functions or operating radio procedures. Examples of such procedures include power control, positioning or determining a location, reporting a compensated measurement to network, logging a compensated measurement, executing a mobility procedure, (re)configuring a measurement, processing the measurement (e.g., determining a signal weight or selecting a combining method for samples or for the measurement when multiple measurements are combined), etc.

Another example embodiment includes a method in a network node. The method comprises obtaining a measurement and information associated with the environmental condition in which said measurement is performed by a radio node. The method further comprises performing at least one radio operational task by using the performed measurement while accounting for the determined environmental condition e.g. determining UE location, cell change, switching between low and high carrier frequencies, etc.

These and other embodiments are described in more detail below.

### Section 1: Methods in a Network Node of Configuring Measurements Accounting for Environmental Conditions

The embodiments described in this section may be used in combination with embodiments described in other sections.

According to this embodiment the network node (e.g. eNodeB, positioning node, TCE or MDT node, coordinating node, etc) configures a radio node (e.g. wireless device, LMU, neighboring BS, etc) for performing one or more measurements while accounting for one or more environmental conditions. The configuring may further be based on the radio node's capability to perform or obtain in some other way one or more measurements while accounting for one or more environmental conditions. This capability may be signaled to the configuring network node and accounted for when configuring said one or more measurements.

In one embodiment, the environmental condition may be obtained or requested prior to configuring the measurement. In another embodiment, the measurement configuration may comprise the configuration for two or more different environmental conditions (the measuring node may then select the most suitable configuration accounting for the conditions). In yet another example, the configuration may be provided based on the most common or most probable environmental conditions. In yet another example, the configuration may comprise an indication of the environmental conditions assumed for the configuration.

To achieve this objective the network node may configure the radio node with at least one parameter related to environmental condition which is linked to one or more configured measurements. This is elaborated with a few examples.

In one example, the network node sends an indicator which indicates whether the radio node should determine the environmental conditions under which the measurements are performed by the radio node and tag the conditions with the performed measurements. The environmental conditions can be pre-defined (e.g. in 3GPP TS 36.101) or they can be configured or combination thereof. Specific environmental characteristics of interest may also be indicated by or associated with said indicator.

In another example, the network node may configure the radio node to determine one or more specific environmental conditions (e.g. temperature and/or humidity levels, etc) under which the measurements are performed by the radio node and tag the conditions with the performed measurements (or tag the performed measurements with the conditions). The determining may also comprise determining the relation of the environmental condition to a reference condition (e.g., whether it is within a range describing a normal condition).

In yet another example, the network node may configure the radio node to determine one or more specific environmental conditions (e.g. temperature, humidity, etc) under which the measurements are performed by the radio node provided certain additional condition(s) is met and tag the conditions with the performed measurements (or tag the performed measurements with the conditions). For example the radio node may be requested to determine the environmental conditions when signal quality is below a threshold (e.g. RSRQ is below -15 dB or RSRP is below -100 dBm) i.e. when measurement accuracy is poor. Another example of additional condition may be a timer value, e.g., when environmental conditions are to be determined periodically or at certain times.

As still another example, the network node may also configure the radio node to determine and associate the radio measurement with one or more metrics or measures for each environmental condition. The metrics for environmental condition certain may also be pre-defined. In one example the network node may configure the radio node with a standard or conventional metric used for that condition e.g. Celsius for temperature. In another example the network node may configure the radio node with metric that depict certain level or range of the environmental condition e.g. low, medium and high. In another example the range may comprise two discrete levels such as normal and extreme environmental conditions. In yet another example the ranges may comprise multiple discrete levels such as 0, 1, 2, 3, 4 and 5 where 0 means lowest and 5 means highest. The ranges of condition corresponding to each discrete level may also be pre-defined e.g. 0 means temperature is below 5 C. The network node may also configure the radio node to associate a relative value of an environmental condition with the measurement(s). The relative value can be obtained with respect to a reference value which can be pre-defined or can also be well known level e.g. boiling point of water (100 °C), atmospheric pressure at sea level (14.7 lbs/inch²).

The network node may also configure the radio node to use the configured measurement while taking into account the environmental conditions for one or more radio operational tasks. Such configuring may also be based on the radio node's capability to perform such task. This is illustrated with the following examples.

In one example the network node may configure the radio node to use the measurements accounting for the environmental conditions for all radio procedures e.g. for cell selection, for cell reselection, for positioning, for MDT, for SON, when reporting a measurement to network node or another radio node, when logging measurement etc.

In another example the network node may configure the radio node to use one or more measurements accounting for the environmental conditions only for one or more specific tasks e.g. only for positioning or MDT and when reporting measurement results of certain measurements (e.g. RSRP and RSRQ).

Using measurements accounting for the environmental conditions may comprise, e.g., tagging the measurements with the environmental conditions, selective using, deciding to use/not to use, using differently depending on the conditions, using differently compared to when environmental conditions are not taken into account, signaling measurements and/or environmental conditions to another node, etc. See also Section 3 below for more examples of using measurements accounting for environmental conditions.

### Section 2: A method in a Radio Node of Performing and Using Measurements Accounting for Environmental Conditions

The embodiments described in this section may be used in combination with embodiments described in other sections.

According to this embodiment the radio node operating in a wireless communication network performs at least one measurement e.g. RSRP or any measurement described above. The radio node also determines at least one environmental condition e.g. temperature. The radio node further associates or tags the measurement results of the performed measurement. Finally, the radio node performs one or more radio operations tasks using the performed measurement while accounting for at least one determined environmental condition.

The above procedure may be triggered by the radio node autonomously, based on pre-defined rules, or based on a configuration received from the network node, or by any combination thereof.

Not all the radio nodes may be capable of the above. Thus, the capable radio nodes may indicate their capability to another node, e.g., to the configuring node.

The above steps and procedures are described by examples in the following subsections.

### Section 2.1 Performing a measurement

In one example, the measurement may comprise a radio measurement the radio node may use any of the existing procedure for performing a radio measurement e.g. RSRP, RSRQ.

In another example, the measurement may comprise determining and logging an event or a failure, e.g., as for MDT (see 3GPP TS 37.320).

The measurement can be done in low activity state (e.g. idle mode or DRX) or in high activity state (e.g. RRC connected).

### Section 2.2 Determining environmental conditions

The radio node may determine the environmental conditions at the start of the measurement or within a time interval associated with the start of the measurement. Additionally or alternatively, the radio node may determine the environmental condition at the end of the measurement or within a time interval associated with the end of the measurement. Additionally or alternatively, the radio node may determine the environmental condition at one or more times during the measurement (this is particularly useful in case a measurement is performed over a longer time and especially when radio node is moving or changing its location or environment e.g. moving from indoor to outdoor or vice versa). Additionally or alternatively, the radio node may determine the environmental condition upon a change of the environment and/or upon an event and/or when a condition is met (e.g., the measurement quality is below a threshold).

In one example, the time of determining environmental conditions may be pre-defined or configurable. The time of determining the environmental condition may further be "remembered" and comprised in the environmental condition information used in other embodiments.

Furthermore the radio node determines one or more environmental conditions implicitly or explicitly.

The determination may be performed by a node different from the node performing the measurement. For example, it may be known that the node determining the environment conditions is in the same or similar environment (e.g., outdoor) as the node performing measurements.

In implicit determination of the environmental condition, the radio node may receive information about environmental conditions through external source e.g. indication from another node.

In another example of implicit determination, the radio node may use time (e.g., of the day, week, month, season, etc.) and location (e.g. location coordinates, positioning measurements or fingerprints, serving cell ID, determined environment type such as indoor/outdoor, etc.) to determine the environmental conditions. For example during winter in certain location the radio node may assume that the temperature is below zero degrees C.

In yet another example of implicit determination, the radio node may use historical data and/or statistics to determine the environmental conditions. For example if most of the time the radio node operates in certain conditions then it may (e.g., initially or by default) assume that it is operating in those conditions.

In yet another example of implicit determination, the radio node may determine the environmental condition by comparing the performed measurement result with a reference measurement value at certain pre-defined location or under pre-defined radio and environment conditions. For example assume that at certain location the reference RSRP measurement result is -90 dBm in normal environmental condition. If the RSRP measurement performed by the radio node at the same location is -100 dBm then the radio node may infer that it is operating in extreme environmental conditions.

In yet another example of implicit determination, the environmental conditions for measurements performed by the radio node X may be determined based on the environmental conditions associated with measurements performed the radio node Y, assuming that the two radio nodes are in the same or similar environment. The measurements from the two nodes may also be obtained close in time (e.g., within an hour of the same day from each other).

By contrast in an explicit mechanism, the radio node implements or interfaces a device or a sensor which can explicitly measure and from which the radio node may obtain one or more environmental conditions e.g. thermometer to measure temperature, humidity meter, pressure gauge, barometer, etc.

### Section 2.3 Associating a measurement with environmental condition

Each measurement quantity can be linked to one or more environmental conditions. This is explained by a few examples.

In one example the radio node may only tag a measurement with limited information related to the environmental condition, e.g., either with normal environmental condition or with an extreme environmental condition i.e. one bit of information. For example the radio node may associate the time stamp (e.g., absolute or relative) with the measurement (e.g. RRC connection establishment failure or re-establishment failure or any other radio measurement such as RSRP or measurements described above) for reporting the measurement while meeting the pre-defined time stamp accuracy requirement, which depends upon or is function of the environmental conditions under which the measurement is done. For example, one or more rules can be pre-defined or can be configured by the network node. One example rule is that it may be pre-defined that the radio node may meet the tighter and coarse relative time stamp accuracies when logging the measurement done under normal and for extreme environmental conditions, respectively. As another example rule, it may be pre-defined or configured by the network node that the radio node logs and/or uses internally and/or reports the measurement while meeting different relative time accuracies under normal and extreme environmental conditions over certain time duration e.g. up to ±200 ppb per hour and ±600 ppb per hour under normal and extreme conditions, respectively. As yet another example rule, it may also be pre-defined or configured by the network node that the radio node logs and/or use internally and/or reports the measurement while meeting the same relative time accuracy regardless of the environmental conditions e.g. ± 200 ppb per hour (i.e. ± 0.72 sec over 1 hour) in normal and extreme conditions. As still another example rule, it may also be pre-defined or configured by the network node that the radio node logs and/or uses internally and/or reports the measurement while i) meeting the same relative time accuracy regardless of the environmental conditions over a first time duration (e.g. ±200 ppb over 1 hour in normal and extreme conditions) and ii) meeting different relative time accuracies under normal and extreme environmental conditions over a second time duration e.g. up to ±6000 ppb over 48 hours (i.e. ±1 sec over 48 hour) and ±24000 ppb over 48 hours (i.e. ±4.1 sec over 48 hour) under normal and extreme conditions respectively.

In another example the radio node may only tag a measurement with more detailed information related to the environmental condition e.g. temperature level in which certain measurement is done.

In yet another example, the radio node may only tag a measurement with limited or more detailed information related to the environmental condition but also indicate whether the environmental condition is determined implicitly or explicitly.

In yet another example, the node performing the measurement may be different from the node determining environmental conditions; the association of the measurement and the environmental condition may be through the time information, e.g., by comparing the time when the measurement was performed and the time when the environmental condition was determined. The association in this case may be performed by the same or different node than that determining the environmental conditions. When they are different, the environmental conditions determination or reporting may also be requested from this other node when the measurements are obtained, configured, or expected to be obtained.

The environmental condition information associated with the measurement and used for tagging may also comprise one or more of (1) Information about accuracy or uncertainty of determining the environmental condition; (2) Information about confidence level of determining the environmental condition (e.g., in % or as the number of samples); and (3) Time when the environmental condition was determined (may be useful to avoid frequent measuring of environmental conditions and hereby save energy and reduce operational overhead).

In one example, the association of measurements with environmental conditions may further be based on one or more additional conditions. One such additional condition may concern the availability of the environmental condition information (e.g. association upon the availability). Additionally or alternatively, an additional condition may concern the age of the environmental condition information (e.g., association if not old or outdated) and/or the completeness of the environmental condition information (e.g., when the requested environmental information is more detailed than what is available in the radio node). Additionally or alternatively, an additional condition may concern the power, energy, or overhead needed to obtain the environmental condition information (e.g., when the environmental information is not available, old, or not sufficiently detailed) and/or the battery level of the radio node (e.g., when the environmental information is not available, old, or not sufficiently detailed or when using the environmental information has a significant impact on the battery level). Additionally or alternatively, an additional condition may concern the node activity state (e.g., obtaining environmental condition may be preferred in a certain activity state and less preferred in another activity state).

### Section 2.4 Performing one or more radio operational tasks

The radio node uses the performed one or more measurements for one or more radio operational tasks while accounting for one or more environment conditions. The radio node performs these tasks while accounting for one or more environment conditions autonomously or when explicitly indicated or configured by the network node. Examples of such tasks are reporting tagged measurement results to the network node, logging tagged measurement results, or logging measurement and associating it with the environmental conditions under which they are performed. Other examples include compensating the radio measurement by applying a compensation factor to reduce or minimize an error in measurement results due to environmental condition (e.g. pre-defined compensation factor such as 3 dB for extreme condition) or compensating the extra gain over a measurement in reference conditions. As another example, tasks may include using the compensated measurement or the measurement together with the environmental condition information for operating one or more RRM functions or radio procedures. Such radio procedures may include for instance uplink and/or downlink power control, positioning or determining a location, reporting a compensated measurement to network, logging a compensated measurement, executing a mobility procedure, (re)configuring a measurement, processing the measurement (e.g., determining a signal weight or selecting a combining method for samples or for the measurement when multiple measurements are combined), etc.

Another example may include switching between carrier frequencies and/or cells depending upon environmental conditions for performing one or more tasks. Such tasks may include the radio node autonomously changing the carrier frequency (e.g. serving carrier of serving cell via cell reselection procedure) and/or recommending the radio network node to switch the carrier frequency accounting for one or more environmental condition. The radio node such as UE may also be pre-configured to switch to lower frequency (e.g. also to pre-defined frequency band) under certain extreme environmental conditions e.g. temperature below -5 °C or above 40 °C and/or relative humidity is 80% or above. For example under higher level of humidity, rain or moisture the radio node may reselect a serving cell at a lower frequency especially if certain condition is met e.g. if UE is at a cell border of old serving cell and/or signal quality is below a threshold. This is because at higher frequency under certain environmental condition the loss or degradation of the signal quality is more significant. The amount of loss in signal quality can be determined from a pre-defined lookup table stored in a radio node. The pre-defined table maps an environmental condition (e.g. dew point), signal loss (e.g. 2 dB) and carrier frequency or frequency range. The lookup table can be obtained from experimental data. By switching the carrier frequency either autonomously or in accordance with an instruction from the radio network node, the radio node can maintain better coverage with the serving cell even under extreme environmental conditions.

### Section 2.5 Triggering procedure involving environmental conditions

The radio node may initiate the procedure of performing and using measurements accounting for environmental conditions in one or more of the following ways: autonomously, according to pre-defined rules, triggered by a network node, or any combination thereof.

In the case of autonomous triggering, the radio node itself decides to perform and use certain measurement while taking into account certain pre-defined environmental conditions to enhance performance for certain procedure.

In the case of pre-defined rules, it may be pre-defined that the radio node shall perform and use certain measurement while taking into account certain pre-defined environmental conditions. In yet another example it may be pre-defined that all measurements which are defined in normal and extreme conditions are tagged with the determined environmental conditions when these measurements are reported to the network node. In yet another example, environmental conditions may always be taken into account, if the radio node is capable to do so. In yet another example, triggering of obtaining environmental conditions may depend on the radio node activity state, the necessary power consumption, and/or the battery level.

In the case of triggering by a network node, the network node may explicitly indicate to the radio node when the radio node should perform certain measurement, determine the environmental condition and perform a certain procedure which takes into account the environmental conditions. In this case the network node may provide additional configuration parameters e.g. type of measurement, type of environmental conditions to be considered etc. The configuration mechanism is described below.

In a combined mechanism, it may be pre-defined that the radio node shall perform and use certain measurement while taking into account certain pre-defined environmental conditions when activated by the network node e.g. by sending an explicit indicator.

### Section 3 A method in a node of using obtained measurements accounting for environmental conditions

The embodiments described in this section may be used in combination with embodiments described in other sections.

According to this embodiment, a node (a radio node or a network node) obtains measurements and the associated environmental conditions information and uses the measurements accounting for the environmental conditions. Methods (of using) for the radio node have been also described above in Section 2.

Methods of using may comprise reporting or forwarding to another node the measurement in association it with one or more environmental conditions to another node (radio node or network node). Methods of using may alternatively or additionally comprise logging the measurement in association or together with the environmental condition. The measurement in association with the environmental condition may also be collected from multiple radio nodes and stored in a database).

Methods of using may alternatively or additionally comprise applying a compensation factor to the measurement to mitigate the error or a gain over a reference measurement due to environmental condition. The application of the compensation factor to the radio measurement may be used to obtain more accurate measurement results. The compensation factor or correction factor is applied using an expression or a function and/or a pre-defined lookup table. They establish a relation between at least one environmental condition and the amount of signal loss or the amount of the compensation required to compensate the loss of signal. The expression or lookup table may also be specific to a measurement or measurement type or may be common for group of measurements, e.g., same for all timing measurements, same for all signal strength measurements, etc. They can be maintained in the network node receiving measurement results and/or in the radio node performing radio measurements. The network node can also configure the radio node or update the radio node with the lookup tables. The lookup table can be created in the background by collecting experimental data or radio measurement statistics e.g. by collecting radio measurements under different environmental conditions. Such an experiment can be performed in a filed or in a laboratory under control environment to obtain desired radio measurements. For example, assume radio node reports a radio measurement result (e.g. RSRP of -90 dBm) tagged with extreme temperature. The pre-defined lookup table depicts that at extreme temperature the signal strength is deteriorated by 2 dB. The radio node or the network node will therefore translate the reported RSRP measurement of -90 dBm to -88 dBm. In this way, the more accurate radio measurement result may be obtained by the radio node itself or by the network node receiving the measurement results tagged with the environmental conditions.

Methods of using may alternatively or additionally include using the compensated measurement or the measurement together with the environmental condition information for one or more RRM functions or operating radio procedures. Such may include for instance power control, reporting a compensated measurement to network, logging a compensated measurement, executing a mobility procedure, (re)configuring a measurement, processing the measurement (e.g., determining a signal weight or selecting a combining method for samples or for the measurement when multiple measurements are combined), etc. Such may alternatively include using for specific purposes, e.g., positioning, MDT, SON.

Methods of using may alternatively or additionally include switching between carrier frequencies and/or cells depending upon environmental conditions for performing one or more tasks. For example, the network node may also configure a radio node or any other radio network node to change the carrier frequency (e.g. serving carrier of serving cell via cell reselection procedure) to switch the carrier frequency accounting for one or more environmental conditions. In one example, under higher level of humidity, rain or moisture the network node may change the serving cell of the UE at a lower frequency especially if certain condition is met e.g. if UE is in cell border of old serving cell and/or signal quality is below a threshold. As described earlier that at higher frequency under certain environmental conditions the loss or degradation of the signal quality is more significant. The amount of loss in signal quality can be determined from a pre-defined lookup table stored in a network node. The pre-defined table maps an environmental condition (e.g. dew point), signal loss (e.g. 2 dB) and carrier frequency or frequency range. The lookup table can be obtained from experimental data. By switching the carrier the UE can maintain better coverage with the serving cell even under extreme environmental conditions.

Methods of using may alternatively or additionally include selecting a look-up table or a record in a table for positioning depending upon environmental conditions. In one example, a look-up table may be pre-defined. The network node (e.g. positioning node) or UE uses pre-defined look-up table, which maps the offline radio measurement results to the UE location, and the radio measurements performed by radio node or UE to determine UE location. This method of positioning may be of a type of fingerprinting, pattern matching, AECID. According to this aspect the network node or any radio node that determines the UE location maintains at least two sets of pre-defined tables or records for determining UE positioning. The pre-defined mapping tables are linked to the environmental conditions. For example one set of pre-defined mapping tables is applicable for normal environmental condition. The other set of pre-defined mapping tables is applicable for extreme environmental conditions. Similarly more than two sets of pre-defined tables can also be maintained each associated with different level of environmental condition. These pre-defined tables are built using similar conditions i.e. measurements done under extreme conditions are used for creating the pre-defined tables to be used under extreme conditions and so on. Depending upon the determined environmental conditions the network node or the radio node (e.g. UE) uses the corresponding pre-defined tables for determining the position of the UE. For example under extreme condition the pre-defined table associated with the same (extreme conditions) can be used for finding the UE location. In this case the UE location can be determined more accurately. In another example, the look up table(s) may be obtained by network training or by collecting measurements and conditions in the real network operation. Similar to the above, the table or the record may be associated with one or more environmental conditions.

Using measurements accounting for the environmental conditions may comprise, e.g., tagging the measurements with the environmental conditions, selective using, deciding to use/not to use, (re)configuring measurements differently (e.g., over a different bandwidth, periodicity, total time interval, etc.) depending on the conditions, using differently depending on the conditions, using differently compared to when environmental conditions are not taken into account, signaling measurements and/or environmental conditions to another node, etc.

### Section 4 Methods in a node of signaling its capability related to measurements and environmental conditions

The embodiments described in this section may be used in combination with embodiments described in other sections.

According to this embodiment, not all nodes may have a capability related to measurements and environmental conditions. Therefore, a first node with such capability may indicate/signal this capability to a second node.

Some examples of the first node: a radio node (e.g., wireless device, eNodeB, relay, a BS) or a network node (e.g., eNodeB, BS, positioning node, coordinating node, a gateway node, TCE or MDT node, SON node, MME, test equipment for testing the second node's functionality etc.).

Some examples of the second node: a radio node (e.g., wireless device, eNodeB, relay, a BS) or a network node (e.g., eNodeB, BS, positioning node, coordinating node, a gateway node, TCE or MDT node, SON node, MME, test equipment for testing the first node's functionality, etc.).

Any combination of the first and second node examples above may be envisioned. For example: (A) wireless device reporting to another wireless device, (B) wireless device reporting to eNodeB, (C) eNodeB reporting to eNodeB, (D) wireless device reporting to positioning node/TCE/SON node, (E) wireless device or eNode B reporting to core network (e.g. MME, a gateway), etc.

The capability may comprise one or more of: capability of measuring or obtaining environmental conditions for using this information in relation to other measurements, capability of performing measurements while accounting for environmental conditions, capability of associating measurements with environmental conditions, capability of signaling measurements together with the environmental conditions information to another node, and capability of compensating or using measurements for one or more operational tasks while accounting for environmental conditions.

The capability may further be associated with one or more of: a specific type of environmental conditions (e.g. temperature), a limited set of the condition values or combinations (e.g., a UE may be capable of only determining or using 'normal' and 'extreme' environmental conditions), accuracy of the environmental condition information (e.g., a radio node may determine the environmental conditions with a certain accuracy, confidence), and minimum time intervals or periodicity at which the environmental conditions may be determined.

Some additional information may also be signaled together with the capability.

The first node having the capability related to measurements and environmental conditions may send the above mentioned capability information to a second node in any of the following manners. First, the first node may engage in proactive reporting without receiving any explicit request from the second node (e.g. serving eNodeB or any target network node). Second, the first node may engage in reporting upon a pre-defined event (e.g., changed environment, connection establishment, cell selection, etc.) or when a condition is met (e.g., a measurement quality or received signal quality is below a threshold or an error rate is above threshold). Third, the first node may engage in reporting upon receiving any explicit request or reporting configuration from the second node (e.g. serving or any target network node) or reporting may be e.g. even-triggered or periodic. Fourth, an explicit request can be sent to the first node by the second node anytime or at any specific occasion. For example, the request for the capability reporting can be sent to the UE during initial setup or after a cell change (e.g. handover, RRC connection re-establishment, RRC connection release with redirection, PCell change in CA, PCC change in PCC etc).

The second node may use the received capability information for performing one or more RRM functions or radio operational tasks. For example, if the first node does not support this capability then the second node does not configure the radio node with parameters associated with the environmental conditions related to measurements.

Other examples of using the received capability information may comprise accounting for the first node's capability when performing uplink power control, measurement configuration, positioning method selection (e.g., AECID with environmental conditions may be selected when the first node supports the capability), executing a mobility procedure, controlling energy saving for the first node, etc.

The second node may also forward the received capability information from the first node to a third node e.g. to another radio node or network node such as a neighboring radio network node, SON node, positioning node, wireless device, etc. There may be no interface between the first and the third nodes, but the forwarding may also allow for reduced signaling overhead for the first node (e.g., no need to signal the capability to a new serving node after a cell change after handover.

Advantages of the various embodiments above are numerous. First, various embodiments enable the obtaining and using of measurements accounting for environmental conditions. Second, various embodiments enable the differentiation between measurements performed in different environmental conditions when using the measurements. Third, various embodiments enable signaling to another node and also using the capability related to measurements and environmental conditions. Fourth, a number of radio network operations and procedures relying on radio measurements can be improved by taking into account the environmental conditions even when radio node operates in extreme conditions e.g. better power control operation, better mobility performance, better positioning accuracy, etc.. Fifth, one or more methods herein enable the network to improve network planning and optimize the configuration of radio network parameters

Note that certain terms used in the above description have a particular meaning as detailed below. A radio node is characterized by its ability to transmit and/or receive radio signals and it comprises at least a transmitting or receiving antenna. A radio node may be a UE or a radio network node (see corresponding descriptions).

A wireless device and UE are used interchangeably in the description. A UE may comprise any device equipped with a radio interface and capable of at least transmitting or receiving a radio signal from another radio node. A UE may also be capable of receiving signal and demodulate it. Note that even some radio network nodes, e.g., femto BS (aka home BS) or LMU, may also be equipped with a UE-like interface. Some example of "UE" that are to be understood in a general sense are PDA, laptop, mobile, a tablet device, sensor, fixed relay, mobile relay, any radio network node equipped with a UE-like interface (e.g., small RBS, eNodeB, femto BS, LMU).

A radio network node is a radio node comprised in a radio communications network. A radio network node may be capable of receiving radio signals and/or transmitting radio signals in one or more frequencies, and may operate in single-RAT, multi-RAT or multi-standard mode (e.g., MSR). A radio network node, including base station, Node B, eNodeB, NodeB, femto or home base station, radio access points, RRH, RRU, relay, mobile relay, donor node serving or controlling relay or mobile relay, or transmitting-only/receiving-only radio network nodes, BSC, BTS, RNC, may or may not create own cell. Some examples of radio network nodes not creating own cell are beacon devices transmitting configured radio signals or measuring nodes receiving and performing measurements on certain signals (e.g., location measurement units, LMUs). It may also share a cell or the used cell ID with another radio node which creates own cell, it may operate in a cell sector or may be associated with a radio network node creating own cell. More than one cell or cell sectors (commonly named in the described embodiments by a generalized term "cell" which may be understood as a cell or its logical or geographical part) may be associated with one radio network node. Further, one or more serving cells (in DL and/or UL) may be configured for a UE, e.g., in a carrier aggregation system where a UE may have one Primary Cell (PCell) and one or more Secondary Cells (SCells). A cell may also be a virtual cell (e.g., characterized by a cell ID but not provide a full cell-like service) associated with a transmit node. A radio network node (e.g., eNodeB, RNC, radio access point, etc.) may be a node controlling a wireless device.

A network node may be e.g. any radio network node (see the corresponding description) or core network node. Some non-limiting examples of a network node are an eNodeB (also radio network node), RNC, positioning node, MME, PSAP, SON node, MDT node (also interchangeably used with "TCE" at least in some embodiments), coordinating node, a gateway node (e.g., P-GW or S-GW or LMU gateway or femto gateway), and O&M node.

The term "coordinating node" used herein is a network and/or node, which coordinates radio resources with one or more radio nodes. Some examples of the coordinating node are network monitoring and configuration node, OSS node, O&M, MDT node, SON node, positioning node, MME, a gateway node such as Packet Data Network Gateway (P-GW) or Serving Gateway (S-GW) network node, femto gateway node, LMU gateway connecting multiple LMUs, a macro node coordinating smaller radio nodes associated with it, eNodeB coordinating resources with other eNodeBs, etc.

The signaling described herein is either via direct links or logical links (e.g. via higher layer protocols and/or via one or more network and/or radio nodes). For example, signaling from a coordinating node to a UE may also pass another network node, e.g., a radio network node.

The described embodiments are not limited to LTE, but may apply with any Radio Access Network (RAN), single- or multi-RAT. Some other RAT examples are LTE TDD, LTE-Advanced, UMTS, HSPA, GSM, cdma2000, WiMAX, and WiFi.

The term "subframe" used in the embodiments described herein (typically related to LTE) is an example resource in the time domain, and in general it may be any pre-defined time instance or time period.

The embodiments apply also for single-carrier, multi-carrier, multi-RAT, and CA networks.

A "measurement" as used herein refers to the act or process of measuring, or to a figure, extent, or amount obtained by measuring, depending on the particular context used.

The term "environmental condition" used herein may refer to any environmental condition described above. An environmental condition describes one or more environmental characteristics/parameters and may be described by one or more values or a range, one or more of the pre-defined levels, an absolute value, a descriptive index or name (e.g. 'normal', 'extreme', etc.), a relative value with respect to a reference, a statistical value (e.g., average over a time interval) or a distribution, an indication of whether the condition is or is not at a pre-defined level, etc.

With this understanding, those skilled in the art will appreciate that embodiments herein also include apparatus configured to perform the above-described processing. In particular, embodiments herein also include a radio node in the wireless communication network 10 (e.g., a wireless communication device 22 or a base station 20). The radio node is configured to perform the processing shown in Figure 6, including any modifications and variations described herein. Embodiments herein also include a node in the wireless communication network 10 (e.g., a wireless communication device 22, a base station 20, a core network node, a positioning node, etc.). The node is configured to perform the processing shown in Figure 7, including any modifications and variations described herein. Embodiments herein further include a network node in the wireless communication network (e.g., a radio network node or a core network node). The network node is configured to perform the processing shown in Figure 8, including any modifications and variations described herein.

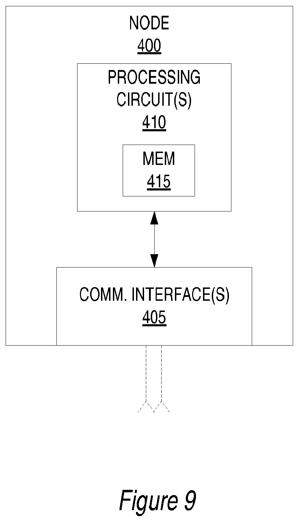

Regardless, those skilled in the art will appreciate that Figure 9 generally illustrates a node 400 in the wireless communication network 10. As shown, the node 400 includes one or more processing circuits 410, one or more communication interfaces 405, and a memory 415.

Where the node 400 comprises a radio node, the one or more communication interfaces 405 include various radio-frequency components (not shown) for sending and receiving radio signals. More particularly, the interface(s) 405 include a transmitter that is configured to use known radio processing and signal processing techniques, typically according to one or more telecommunications standards, and is configured to format digital data and condition a radio signal, from that data, for transmission over the air via one or more antennas. Similarly, the interface(s) 405 include a receiver that is configured to convert radio signals received via the antenna(s) into digital samples for processing by the one or more processing circuits 410. The one or more processing circuits 410 extract data from signals received via the receiver and generate information for transmission via the transmitter.

Additionally or alternatively, where the node 400 comprises a network node, the one or more communication interfaces 405 include one or more network interfaces configured to communicate with one or more other network nodes in the network 10.

The one or more processing circuits 410 comprise one or several microprocessors, digital signal processors, and the like, as well as other digital hardware. Memory 415, which may comprise one or several types of memory such as read-only memory (ROM), random-access memory, cache memory, flash memory devices, optical storage devices, etc., stores program code for executing one or more telecommunications and/or data communications protocols and for carrying out one or more of the techniques described herein. Memory further stores program data, user data, and also stores various parameters and/or other program data for controlling the operation of the node 400.

Of course, not all of the steps of the techniques described herein are necessarily performed in a single microprocessor or even in a single module. Thus, a more generalized control circuit configured to carry out the operations described above may have a physical configuration corresponding directly to the processing circuit(s) 410 or may be embodied in two or more modules or units.

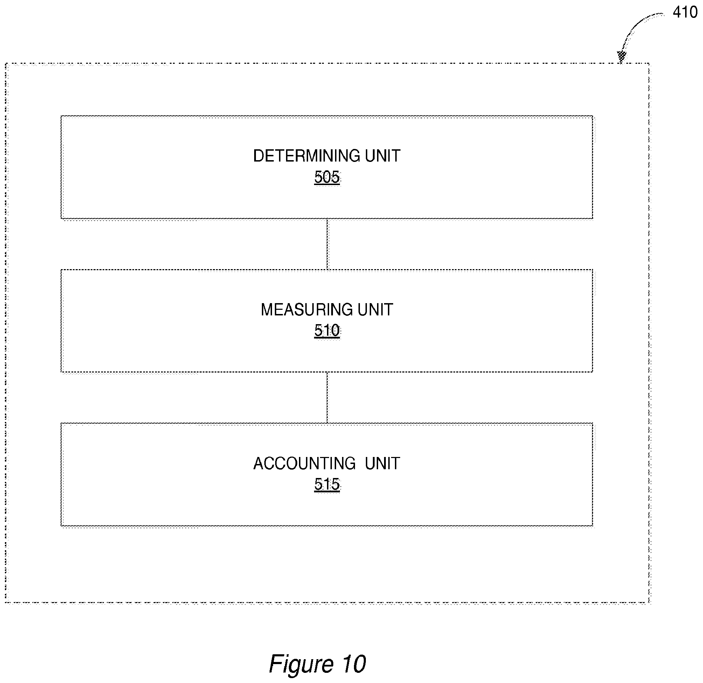

Where the node 400 is a radio node and is configured to perform the processing in Figure 6, therefore, Figure 10 illustrates the functional units of the radio node's processing circuit(s) 410 according to one or more embodiments. The functional units include a determination unit 505 for determining the one or more environmental conditions under which a measurement has been, is being, or will be performed by the radio node. The functional units further include a measuring unit 510 for performing the measurement. The functional units finally include an accounting unit 515 for accounting for an effect of those one or more environmental conditions on the measurement when at least one of configuring the measurement to be performed and selectively using the measurement to perform a radio operational task.

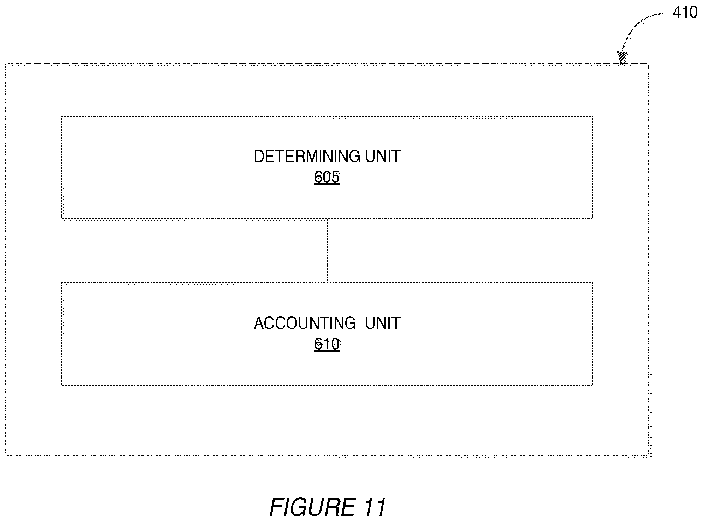

Where the node 400 is configured to perform the processing in Figure 7, Figure 11 illustrates the functional units of the node's processing circuit(s) 410 according to one or more embodiments. The functional units include a determination unit 605 for determining the one or more environmental conditions under which a measurement has been, is being, or will be performed by a radio node. The functional units also include an accounting unit 610 for accounting for an effect of those one or more environmental conditions on the measurement when selectively using the measurement to perform a radio operational task.

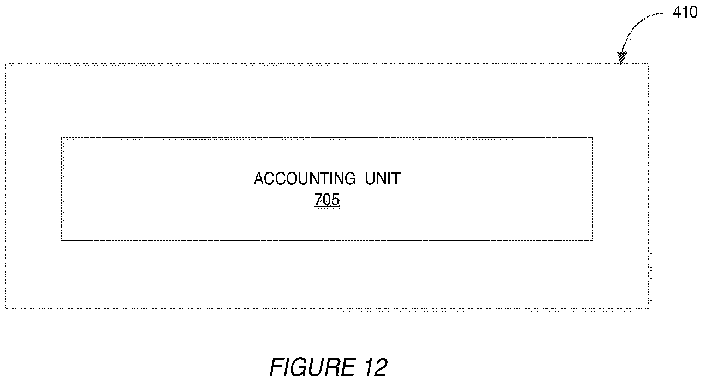

Where the node 400 is a network node and is configured to perform the processing in Figure 8, Figure 12 illustrates the functional units of the node's processing circuit(s) 410 according to one or more embodiments. The functional units include an accounting unit 705 for accounting for an effect of one or more environmental conditions on a measurement that is performed by the radio node when at least one of configuring the radio node to perform the measurement and configuring the radio node to use a result of the measurement to perform a radio operational task.

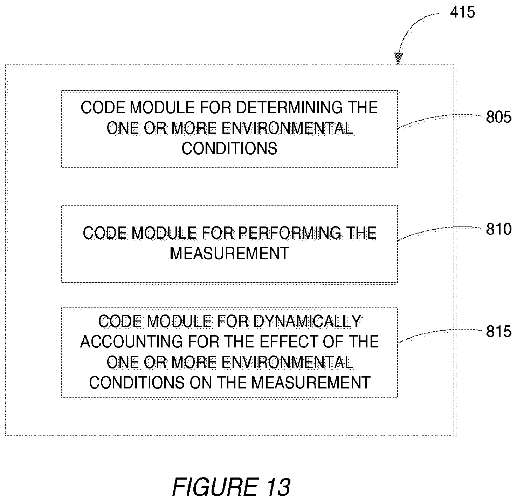

Those skilled in the art will also appreciate that embodiments herein further include a corresponding computer program. The computer program comprises instructions which, when executed on at least one processor, cause the at least one processor to carry out any of the processing described above. Embodiments further include a carrier containing such a computer program. This carrier may comprise one of an electronic signal, optical signal, radio signal, or computer readable storage medium. Figures 13-15 for example illustrate a computer program comprising one or more code modules contained in memory 415 of the node 400 in Figure 9.

Where the node 400 is a radio node and is configured to perform the processing in Figure 6, Figure 13 illustrates the code modules of the computer program according to one or more embodiments. The code modules include a code module 805 for determining the one or more environmental conditions under which a measurement has been, is being, or will be performed by the radio node. The code modules further include a code module 810 for performing the measurement. The code modules finally include code module 815 for accounting for an effect of those one or more environmental conditions on the measurement when at least one of configuring the measurement to be performed and selectively using the measurement to perform a radio operational task.

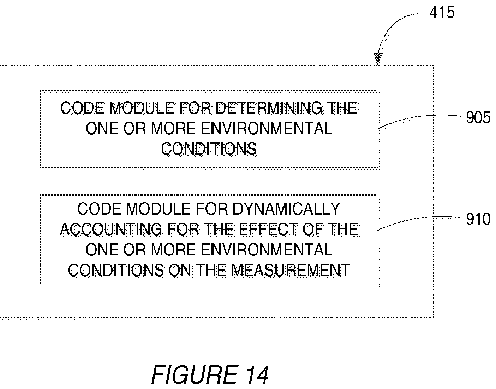

Where the node 400 is configured to perform the processing in Figure 7, Figure 14 illustrates the code modules of the computer program according to one or more embodiments. The code modules include a code module 905 for determining the one or more environmental conditions under which a measurement has been, is being, or will be performed by a radio node. The code modules also include a code module 910 for accounting for an effect of those one or more environmental conditions on the measurement when selectively using the measurement to perform a radio operational task.

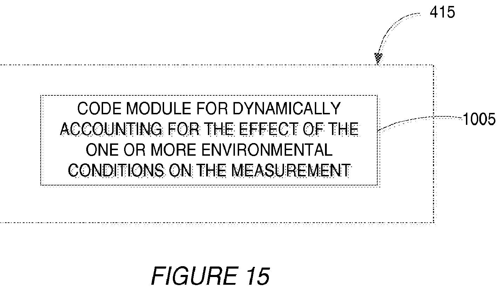

Where the node 400 is a network node and is configured to perform the processing in Figure 8, Figure 15 illustrates the code modules of the computer program according to one or more embodiments. The code modules include a code module 1005 for accounting for an effect of one or more environmental conditions on a measurement that is performed by the radio node when at least one of configuring the radio node to perform the measurement and configuring the radio node to use a result of the measurement to perform a radio operational task.

The present invention may, of course, be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

## Claims

1. A method performed by a network node in a wireless communication network (10), the method comprising:
determining (105, 205, 305) one or more environmental conditions under which a measurement has been, is being, or will be performed by a radio node in the wireless communication network; and
accounting (115, 210, 310) for an effect of the one or more environmental conditions on the measurement,
**characterized in that** said accounting comprises at least one of
(a) configuring the measurement to be performed over different bandwidths, over different carrier frequencies, over different periodicities, during different total time intervals and/or on different cells under different environmental conditions according to a defined mapping of environmental conditions to measurement configurations, and
(b) applying different compensation factors or offsets to the result of the measurement, or to a reference measurement to which said result is compared, under different environmental conditions in order to compensate for those environmental conditions.

2. The method of claim 1, wherein said determining and said accounting are performed by the radio node.

3. The method of claim 1, wherein said accounting comprises configuring the measurement to be performed differently depending on the one or more environmental conditions.

4. The method of any of claims 1-3, wherein said accounting comprises associating the result of the measurement with the one or more environmental conditions.

5. The method of any of claims 1-4, wherein said accounting comprises linking the result of the measurement with information describing the one or more environmental conditions and reporting or logging the result as linked to said information.

6. The method of any of claims 1-5, wherein said accounting comprises time stamping the result of the measurement in accordance with different time stamp accuracy requirements under different environmental conditions.

7. The method of any of claims 1-6, wherein said accounting comprises determining a position of the radio node or another radio node using the result of the measurement, by comparing the result of the measurement to different sets of positioning reference measurements under different environmental conditions.

8. The method of any of claims 1-7, wherein said accounting comprises selecting whether to use a result of the measurement to perform a radio operational task depending on the one or more environmental conditions.

9. The method of any of claims 1-8, further comprising signaling to another node information indicating the radio node's capability to account for the effect of one or more environmental conditions on the measurement.

10. The method of claim 1, wherein said accounting comprises sending an indicator to the radio node indicating that the radio node is to determine the one or more environmental conditions under which the measurement is performed and link the result of the measurement with information describing the one or more environmental conditions.

11. The method of any of claims 1-10, wherein determining (105, 205, 305) the one or more environmental conditions comprises determining the one or more environmental conditions from explicit measurement of the one or more environmental conditions by a device or sensor.

12. The method of any of claims 1-11, wherein the one or more environmental conditions include at least one of:
one or more weather or climatic conditions;
one or more conditions related to electricity;
one or more conditions related to vibration of the radio node;
one or more conditions related to an earthquake.

13. A network node in a wireless communication network (10), wherein the network node is configured to:
determine one or more environmental conditions under which a measurement has been, is being, or will be performed by a radio node in the wireless communication network; and
account for an effect of the one or more environmental conditions on the measurement,
**characterized in that** the network node is configured to account for an effect of the one or more environmental conditions by at least one of
(a) configuring the measurement to be performed over different bandwidths, over different carrier frequencies, over different periodicities, during different total time intervals and/or on different cells under different environmental conditions according to a defined mapping of environmental conditions to measurement configurations, and
(b) applying different compensation factors or offsets to the result of the measurement, or to a reference measurement to which said result is compared, under different environmental conditions in order to compensate for those environmental conditions.

14. A method performed by a radio node in a wireless communication network (10), the method comprising:
determining one or more environmental conditions under which a measurement has been, is being, or will be performed by the radio node;
performing the measurement; and
accounting for an effect of the one or more environmental conditions on the measurement,
**characterized in that** said accounting for an effect of the one or more environmental conditions comprises at least one of
(a) performing the measurement over different bandwidths, over different carrier frequencies, over different periodicities, during different total time intervals and/or on different cells under different environmental conditions according to a defined mapping of environmental conditions to measurement configurations, and
(b) applying different compensation factors or offsets to the result of the measurement, or to a reference measurement to which said result is compared, under different environmental conditions in order to compensate for those environmental conditions.

15. A radio node in a wireless communication network (10), wherein the radio node is configured to:
determine one or more environmental conditions under which a measurement has been, is being, or will be performed by the radio node;
perform the measurement; and
account for an effect of the one or more environmental conditions on the measurement,
**characterized in that** the radio node is configured to account for an effect of the one or more environmental conditions by at least one of
(a) performing the measurement over different bandwidths, over different carrier frequencies, over different periodicities, during different total time intervals and/or on different cells under different environmental conditions according to a defined mapping of environmental conditions to measurement configurations, and
(b) applying different compensation factors or offsets to the result of the measurement, or to a reference measurement to which said result is compared, under different environmental conditions in order to compensate for those environmental conditions.

## Patentansprüche

1. Verfahren, durchgeführt durch einen Netzwerkknoten in einem drahtlosen Kommunikationsnetzwerk (10), wobei das Verfahren Folgendes umfasst:
Bestimmen (105, 205, 305) von einer oder mehreren Umweltbedingungen, unter denen eine Messung durch einen Funkknoten in dem drahtlosen Kommunikationsnetzwerk durchgeführt wurde, wird oder werden wird; und
Berücksichtigen (115, 210, 310) einer Auswirkung der einen oder mehreren Umweltbedingungen auf die Messung,
**dadurch gekennzeichnet, dass** das Berücksichtigen zumindest eines der Folgenden umfasst:
(a) Konfigurieren der über verschiedene Bandbreiten, über verschiedene Trägerfrequenzen, über verschiedene Periodizitäten, während verschiedener Gesamtzeitintervalle und/oder auf verschiedenen Zellen unter verschiedenen Umweltbedingungen durchzuführenden Messungen gemäß einer definierten Zuordnung von Umweltbedingungen zu Messkonfigurationen, und
(b) Anwenden von verschiedenen Ausgleichsfaktoren oder Offsets auf das Ergebnis der Messung oder auf eine Referenzmessung, mit der das Ergebnis verglichen wird, unter verschiedenen Umweltbedingungen, um diese Umweltbedingungen auszugleichen.

2. Verfahren nach Anspruch 1, wobei das Bestimmen und das Berücksichtigen durch den Funkknoten durchgeführt werden.

3. Verfahren nach Anspruch 1, wobei das Berücksichtigen ein unterschiedliches Konfigurieren der durchzuführenden Messung in Abhängigkeit von der einen oder den mehreren Umweltbedingungen umfasst.

4. Verfahren nach einem der Ansprüche 1-3, wobei das Berücksichtigen ein Assoziieren des Ergebnisses der Messung mit der einen oder den mehreren Umweltbedingungen umfasst.

5. Verfahren nach einem der Ansprüche 1-4, wobei das Berücksichtigen ein Verknüpfen des Ergebnisses der Messung mit Informationen, die die eine oder mehreren Umweltbedingungen beschreiben, und Berichten oder Protokollieren des Ergebnisses, so wie mit diesen Informationen verknüpft, umfasst.

6. Verfahren nach einem der Ansprüche 1-5, wobei das Berücksichtigen ein Zeitstempeln des Ergebnisses in Übereinstimmung mit verschiedenen Zeitstempelgenauigkeitsanforderungen unter verschiedenen Umweltbedingungen umfasst.

7. Verfahren nach einem der Ansprüche 1-6, wobei das Berücksichtigen ein Bestimmen einer Position des Funkknotens oder eines anderen Funkknotens unter Verwendung des Ergebnisses der Messung durch Vergleichen des Ergebnisses der Messung mit verschiedenen Sätzen von Positionierungsreferenzmessungen unter verschiedenen Umweltbedingungen umfasst.

8. Verfahren nach einem der Ansprüche 1-7, wobei das Berücksichtigen ein Auswählen, ob ein Ergebnis der Messung in Abhängigkeit von der einen oder den mehreren Umweltbedingungen zum Durchführen einer Funkbetriebsaufgabe verwendet werden soll, umfasst.

9. Verfahren nach einem der Ansprüche 1-8, ferner umfassend ein Signalisieren von Informationen, die die Fähigkeit des Funkknotens zum Berücksichtigen der Auswirkung von einer oder mehreren Umweltbedingungen auf die Messung anzeigen, an einen weiteren Knoten.

10. Verfahren nach Anspruch 1, wobei das Berücksichtigen ein Senden eines Indikators an den Funkknoten umfasst, der anzeigt, dass der Funkknoten die eine oder mehreren Umweltbedingungen bestimmen, unter denen die Messung durchgeführt wird, und das Ergebnis der Messung mit Informationen, die die eine oder mehreren Umweltbedingungen beschreiben, verknüpfen soll.

11. Verfahren nach einem der Ansprüche 1-10, wobei das Bestimmen (105, 205, 305) der einen oder mehreren Umweltbedingungen ein Bestimmen der einen oder mehreren Umweltbedingungen aus expliziter Messung der einen oder mehreren Umweltbedingungen durch eine Vorrichtung oder einen Sensor umfasst.

12. Verfahren nach einem der Ansprüche 1-11, wobei die einen oder mehreren Umweltbedingungen zumindest eines der Folgenden beinhalten:
eine oder mehrere Wetter- oder Klimabedingungen;
eine oder mehrere Bedingungen in Bezug auf Elektrizität;
eine oder mehrere Bedingungen in Bezug auf Vibration des Funkknotens;
eine oder mehrere Bedingungen in Bezug auf ein Erdbeben.

13. Netzwerkknoten in einem drahtlosen Kommunikationsnetzwerk (10), wobei der Netzwerkknoten für Folgendes konfiguriert ist:
Bestimmen von einer oder mehreren Umweltbedingungen, unter denen eine Messung durch einen Funkknoten in dem drahtlosen Kommunikationsnetzwerk durchgeführt wurde, wird oder werden wird; und
Berücksichtigen einer Auswirkung der einen oder mehreren Umweltbedingungen auf die Messung,
**dadurch gekennzeichnet, dass** der Netzwerkknoten dazu konfiguriert ist, eine Auswirkung von der einen oder den mehreren Umweltbedingungen durch zumindest eines der Folgenden zu berücksichtigen:
(a) Konfigurieren der über verschiedene Bandbreiten, über verschiedene Trägerfrequenzen, über verschiedene Periodizitäten, während verschiedener Gesamtzeitintervalle und/oder an verschiedenen Zellen unter verschiedenen Umweltbedingungen durchzuführenden Messung gemäß einer definierten Zuordnung von Umweltbedingungen zu Messkonfigurationen, und
(b) Anwenden von verschiedenen Ausgleichsfaktoren oder Offsets auf das Ergebnis der Messung oder auf eine Referenzmessung, mit der das Ergebnis verglichen wird, unter verschiedenen Umweltbedingungen, um diese Umweltbedingungen auszugleichen.

14. Verfahren, durchgeführt durch einen Funkknoten in einem drahtlosen Kommunikationsnetzwerk (10), wobei das Verfahren Folgendes umfasst:
Bestimmen von einer oder mehreren Umweltbedingungen, unter denen eine Messung durch den Funkknoten durchgeführt wurde, wird oder werden wird;
Durchführen der Messung; und
Berücksichtigen einer Auswirkung der einen oder mehreren Umweltbedingungen auf die Messung,
**dadurch gekennzeichnet, dass** das Berücksichtigen einer Auswirkung der einen oder mehreren Umweltbedingungen zumindest Folgendes umfasst:
(a) Durchführen der Messung über verschiedene Bandbreiten, über verschiedene Trägerfrequenzen, über verschiedene Periodizitäten, während verschiedener Gesamtzeitintervalle und/oder an verschiedenen Zellen unter verschiedenen Umweltbedingungen gemäß einer definierten Zuordnung von Umweltbedingungen zu Messkonfigurationen, und
(b) Anwenden von verschiedenen Ausgleichsfaktoren oder Offsets auf das Ergebnis der Messung oder auf eine Referenzmessung, mit der das Ergebnis verglichen wird, unter verschiedenen Umweltbedingungen, um diese Umweltbedingungen auszugleichen.

15. Funkknoten in einem drahtlosen Kommunikationsnetzwerk (10), wobei der Funkknoten für Folgendes konfiguriert ist:
Bestimmen von einer oder mehreren Umweltbedingungen, unter denen eine Messung durch den Funkknoten durchgeführt wurde, wird oder werden wird;
Durchführen der Messung; und
Berücksichtigen einer Auswirkung der einen oder mehreren Umweltbedingungen auf die Messung,
**dadurch gekennzeichnet, dass** der Funkknoten dazu konfiguriert ist, eine Auswirkung von einer oder mehreren Umweltbedingungen durch zumindest eines der Folgenden zu berücksichtigen:
(a) Durchführen der Messung über verschiedene Bandbreiten, über verschiedene Trägerfrequenzen, über verschiedene Periodizitäten, während verschiedener Gesamtzeitintervalle und/oder an verschiedenen Zellen unter verschiedenen Umweltbedingungen gemäß einer definierten Zuordnung von Umweltbedingungen zu Messkonfigurationen, und
(b) Anwenden von verschiedenen Ausgleichsfaktoren oder Offsets auf das Ergebnis der Messung oder für eine Referenzmessung, mit der das Ergebnis verglichen wird, unter verschiedenen Umweltbedingungen, um diese Umweltbedingungen auszugleichen.

## Revendications

1. Procédé réalisé par un noeud de réseau dans un réseau de communication sans fil (10), le procédé comprenant :
la détermination (105, 205, 305) d'une ou de plusieurs conditions environnementales dans lesquels une mesure a été, est, ou sera réalisée par un noeud radio dans le réseau de communication sans fil ; et
la prise en compte (115, 210, 310) d'un effet de l'une ou plusieurs conditions environnementales sur la mesure,
**caractérisé en ce que** ladite prise en compte comprend au moins l'une parmi
(a) la configuration de la mesure à réaliser sur différentes bandes passantes, sur différentes fréquences porteuses, sur différentes périodicités, pendant différents intervalles de temps total et/ou sur différentes cellules dans différentes conditions environnementales selon un mappage défini de conditions environnementales pour des configurations de mesure, et
(b) l'application de différents facteurs de compensation ou de décalages sur le résultat de la mesure, ou sur une mesure de référence à laquelle ledit résultat est comparé, dans différentes conditions environnementales afin de compenser ces conditions environnementales.

2. Procédé selon la revendication 1, dans lequel ladite détermination et ladite prise en compte sont réalisées par le noeud radio.

3. Procédé selon la revendication 1, dans lequel ladite prise en compte comprend la configuration de la mesure à réaliser différemment en fonction de l'une ou plusieurs conditions environnementales.

4. Procédé selon l'une quelconque des revendications 1 à 3, dans lequel ladite prise en compte comprend l'association du résultat de la mesure avec l'une ou plusieurs conditions environnementales.

5. Procédé selon l'une quelconque des revendications 1 à 4, dans lequel ladite prise en compte comprend la liaison du résultat de la mesure avec des informations décrivant l'une ou plusieurs conditions environnementales et le rapport ou l'enregistrement du résultat en lien avec lesdites informations.

6. Procédé selon l'une quelconque des revendications 1 à 5, dans lequel ladite prise en compte comprend le marquage de l'heure du résultat de la mesure en fonction de différentes exigences de précision de marquage de l'heure dans différentes conditions environnementales.

7. Procédé selon l'une quelconque des revendications 1 à 6, dans lequel ladite prise en compte comprend la détermination d'une position du noeud radio ou d'un autre noeud radio en utilisant le résultat de la mesure, par comparaison du résultat de la mesure à différents ensembles de mesures de référence de positionnement dans différentes conditions environnementales.

8. Procédé selon l'une quelconque des revendications 1 à 7, dans lequel ladite prise en compte comprend le choix de l'utilisation ou non d'un résultat de la mesure pour réaliser une tâche opérationnelle radio dépendant de l'une ou plusieurs conditions environnementales.

9. Procédé selon l'une quelconque des revendications 1 à 8, comprenant en outre la signalisation à un autre noeud des informations indiquant la capacité du noeud radio à prendre en compte l'effet d'une ou plusieurs conditions environnementales lors de la mesure.

10. Procédé selon la revendication 1, dans lequel ladite prise en compte comprend l'envoi d'un indicateur au noeud radio indiquant que le noeud radio doit déterminer l'une ou plusieurs conditions environnementales dans lesquelles la mesure est réalisée et lier le résultat de la mesure avec des informations décrivant l'une ou plusieurs conditions environnementales.

11. Procédé selon l'une quelconque des revendications 1 à 10, dans lequel la détermination (105, 205, 305) des une ou plusieurs conditions environnementales comprend la détermination de l'une ou plusieurs conditions environnementales à partir d'une mesure explicite de l'une ou plusieurs conditions environnementales par un dispositif ou un capteur.

12. Procédé selon l'une quelconque des revendications 1 à 11, dans lequel l'une ou plusieurs conditions environnementales comprennent au moins l'une parmi :
une ou plusieurs conditions météorologiques ou climatiques ;
une ou plusieurs conditions liées à l'électricité ;
une ou plusieurs conditions liées à la vibration du noeud radio ;
une ou plusieurs conditions liées à un tremblement de terre.

13. Noeud de réseau dans un réseau de communication sans fil (10), dans lequel le noeud de réseau est configuré pour :
déterminer une ou plusieurs conditions environnementales dans lesquels une mesure a été, est, ou sera réalisée par un noeud radio dans le réseau de communication sans fil ; et
prendre en compte un effet de l'une ou plusieurs conditions environnementales sur la mesure,
**caractérisé en ce que** le noeud de réseau est configuré pour prendre en compte un effet de l'une ou plusieurs conditions environnementales par au moins l'une parmi
(a) la configuration de la mesure à réaliser sur différentes bandes passantes, sur différentes fréquences porteuses, sur différentes périodicités, pendant différents intervalles de temps total et/ou sur différentes cellules dans différentes conditions environnementales selon un mappage défini de conditions environnementales pour des configurations de mesure, et
(b) l'application de différents facteurs de compensation ou de décalages sur le résultat de la mesure, ou sur une mesure de référence à laquelle ledit résultat est comparé, dans différentes conditions environnementales afin de compenser ces conditions environnementales.

14. Procédé réalisé par un noeud radio dans un réseau de communication sans fil (10), le procédé comprenant :
la détermination d'une ou de plusieurs conditions environnementales dans lesquels une mesure a été, est, ou sera réalisée par le noeud radio ;
la réalisation de la mesure ; et
la prise en compte d'un effet de l'une ou plusieurs conditions environnementales sur la mesure,
**caractérisé en ce que** ladite prise en compte d'un effet de l'une ou plusieurs conditions environnementales comprend au moins l'une parmi
(a) la réalisation de la mesure sur différentes bandes passantes, sur différentes fréquences porteuses, sur différentes périodicités, pendant différents intervalles de temps total et/ou sur différentes cellules dans différentes conditions environnementales selon un mappage défini de conditions environnementales pour des configurations de mesure, et
(b) l'application de différents facteurs de compensation ou de décalages sur le résultat de la mesure, ou sur une mesure de référence à laquelle ledit résultat est comparé, dans différentes conditions environnementales afin de compenser ces conditions environnementales.

15. Noeud radio dans un réseau de communication sans fil (10), dans lequel le noeud radio est configuré pour :
déterminer une ou plusieurs conditions environnementales dans lesquels une mesure a été, est, ou sera réalisée par le noeud radio ;
réaliser la mesure ; et
prendre en compte un effet de l'une ou plusieurs conditions environnementales sur la mesure,
**caractérisé en ce que** le noeud radio est configuré pour prendre en compte un effet de l'une ou plusieurs conditions environnementales par au moins l'une parmi
(a) la réalisation de la mesure sur différentes bandes passantes, sur différentes fréquences porteuses, sur différentes périodicités, pendant différents intervalles de temps total et/ou sur différentes cellules dans différentes conditions environnementales selon un mappage défini de conditions environnementales pour des configurations de mesure, et
(b) l'application de différents facteurs de compensation ou de décalages sur le résultat de la mesure, ou sur une mesure de référence à laquelle ledit résultat est comparé, dans différentes conditions environnementales afin de compenser ces conditions environnementales.
